# FASCICULE DE BREVET EUROPEEN

(11) **EP 2 054 329 B1**
(45) Date de publication et mention de la délivrance du brevet: **13.10.2010**
(21) Numéro de dépôt: 07802557.4
(22) Date de dépôt: 09.08.2007
(51) Int. Cl.: B65G 47/28, B65G 47/32

(54) **AGENCEMENT POUR LE REGROUPEMENT EN RANG DE PRODUITS D'UN LOT SUR UN TAPIS DE CONVOYAGE Á HAUTE CADENCE**
ANORDNUNG ZUR REIHENEINTEILUNG VON PRODUKTEN EINER CHARGE AUF EINEM HOCHGESCHWINDIGKEITSFÖRDERBAND
ARRANGEMENT FOR GROUPING INTO ROWS THE PRODUCTS OF A BATCH ON A HIGH-SPEED CONVEYOR BELT

(30) Priorité: 24.08.2006 FR 0653446
(43) Date de publication de la demande: 06.05.2009
(73) Titulaire: Sidel Participations (Societé par Actions Simplifiée), 76930 Octeville Sur Mer (FR)
(72) Inventeur: DUCHEMIN, Guillaume, F-76930 Octeville Sur Mer (FR); POUPON, Christophe, F-76930 Octeville Sur Mer (FR)
(74) Mandataire: Thibaudeau, David A. C. R.
(86) Numéro de dépôt international: PCT/EP2007/058279
(87) Numéro de publication internationale: WO 2008/022930

(56) Documents cités:
- EP-A- 0 452 560
- US-A1- 4 892 181

## Description

L'invention concerne un agencement pour le regroupement en rang de produits d'un lot, notamment sur un tapis de convoyage à haute cadence, selon le préambule de la revendication 1.

L'invention concerne plus particulièrement un agencement pour le regroupement de plusieurs produits sous forme de lots, dans lequel les produits sont transportés sur au moins un tapis de convoyage qui défile suivant une direction longitudinale, depuis une zone d'arrivée amont vers une zone de sortie aval, à une vitesse déterminée, dite de défilement, dans lequel les produits sont disposés longitudinalement sur le tapis suivant au moins une première file de produits et une deuxième file de produits parallèle à la première file et comportant respectivement des produits qui, d'une file à l'autre file, sont décalés longitudinalement entre eux d'au moins un espacement amont, et comportant des moyens de phasage qui, agencés sur le trajet des produits entre la zone d'arrivée et la zone de sortie, sont aptes à former des lots constitués par le regroupement d'au moins deux produits et en un rang transversal, les moyens de phasage comportant au moins un phaseur qui comporte au moins un taquet commandé successivement entre :
- au moins une position engagée dans laquelle le taquet s'interpose, par contact, devant un produit de l'une des files en vue de le ralentir jusqu'à ce qu'il soit rejoint par au moins un autre produit situé immédiatement en amont sur l'autre des files, et
- au moins une position escamotée qui permet de laisser le lot formé précédemment poursuivre son déplacement vers l'aval à la vitesse de défilement.

Ce type d'agencement est utilisé dans des installations pour le conditionnement de produits, par exemple dans des installations comportant une ligne de convoyage qui achemine les produits jusqu'à une machine d'encaissage, la machine d'encaissage empilant des lots de produits dans des caisses ou cartons d'emballage.

La ligne de convoyage comporte généralement, en amont de la machine d'encaissage, un tapis de convoyage qui transporte les produits sur une ou plusieurs files, avec un espacement déterminé entre deux produits consécutifs, jusqu'à un regroupeur comportant une série d'alvéoles de transport mobiles.

Le regroupeur présente, en regard du tapis, au moins une alvéole vide prévue pour recevoir un nombre déterminé de produits qui viennent s'empiler dans l'alvéole de manière à constituer un lot.

Lorsqu'un lot est constitué dans l'alvéole, celle-ci est déplacée d'un cran pour permettre au regroupeur de présenter une nouvelle alvéole vide en regard du tapis.

Les alvéoles se décalent ainsi progressivement, généralement cran par cran, ce qui permet d'acheminer les lots de produits jusqu'à la machine d'encaissage.

Pour faciliter et accélérer le remplissage des alvéoles, il est connu de constituer les lots de produits en amont du regroupeur, au moyen d'un dispositif comportant des moyens de phasage des produits, encore appelé "phaseur".

Selon une première solution, il est connu de réaliser un tel phaseur au moyen de plusieurs tapis de convoyage successifs, dits tapis cadenceurs, qui fonctionnent avec des vitesses de défilement différentes.

Dans ce type de phaseur, les produits arrivent disposés sur des fîtes, par un premier tapis de convoyage, sur un tapis amont d'accélération fonctionnant à une vitesse de défilement supérieure à celle du premier tapis.

Le tapis amont achemine les produits jusqu'à un tapis intermédiaire ralentisseur.

Les produits sont plaqués et retenus sur le tapis intermédiaire au moyen d'un dispositif inférieur d'aspiration.

Le tapis intermédiaire décale progressivement chaque produit vers l'avant jusqu'à ce qu'un lot en rang comportant au moins deux produits regroupés l'un à côté de l'autre soit constitué sur le tapis intermédiaire.

Lorsque le lot de produits est constitué, la vitesse de défilement du tapis intermédiaire augmente de manière à transférer le lot sur un tapis aval qui fonctionne à une vitesse de défilement similaire à celle du tapis amont.

L'accélération du lot de produits lors de son transfert du tapis intermédiaire vers le tapis aval limite la cadence globale car, trop importante, elle provoque alors un déplacement d'un ou plusieurs produits susceptible de désorganiser le lot.

Ce type de phaseur n'est encore pas satisfaisant car il nécessite l'utilisation de plusieurs tapis de convoyage mis bout à bout, ce qui est particulièrement pénalisant pour l'encombrement longitudinal de l'installation.

La régulation de la vitesse des différents tapis de convoyage et la longueur de ces tapis sont par conséquent calculées pour un type déterminé de produits et de lots de sorte qu'il est nécessaire de mettre au point un nouveau phaseur lorsque la longueur des produits ou le nombre de produits par lot est par exemple modifiée.

De plus, le dispositif d'aspiration ne fonctionne pas pour certains types de produits, ce qui limite le champ d'application de ce phaseur.

De par sa conception, un phaseur selon cette première solution ne permet donc pas le traitement de produits à très haute cadence.

Selon une deuxième solution, il est connu, par exemple du document US-4.892.181, un agencement pour le regroupement en rang de plusieurs produits, selon le préambule de la revendication 1.

Dans ce document, les moyens de phasage sont en particulier aptes à ralentir un ou plusieurs produits transportés sur un tapis de convoyage de manière à former un rang transversal à partir d'au moins deux produits appartenant à deux files parallèles et initialement décalés longitudinalement entre eux.

Toutefois, les moyens de phasage selon ce document ne sont aptes à mettre en rang des produits comportant uniquement un espacement amont réduit car la distance de ralentissement est très courte.

Ainsi, il n'est pas possible de réaliser un traitement de produits à très haute cadence, notamment à des cadences de plus de 900 produits par minute, .

C'est une des raisons pour lesquelles, le demandeur a proposé dans la demande de brevet français N°0550528 déposée le 28.02.2005 (non publiée), une nouvelle conception de phaseur constituant une solution à la fois simple, économique, et efficace permettant de remédier aux inconvénients des moyens de phasage selon l'état de la technique.

Cette demande N°0550528 concerne un agencement du type de celui décrit précédemment, comportant un phaseur qui est agencé entre la zone d'arrivée et la zone de sortie d'un tapis de convoyage pour procéder au regroupement "en colonne" de produits de manière à constituer des lots à partir plusieurs produits défilant en une seule et unique file longitudinale avec un espacement amont déterminé.

A cet effet, le phaseur comporte au moins un taquet escamotable qui est susceptible d'être commandé respectivement entre :
- au moins une position engagée dans laquelle le taquet s'interpose, par contact, devant un premier produit de la file en vue de le ralentir jusqu'à ce que ce premier produit soit rejoint par au moins un second produit qui est situé immédiatement en amont dans la file de produits, de manière à constituer un premier lot formé du regroupement en colonne de deux produits alignés longitudinalement l'un derrière l'autre.
- au moins une position escamotée qui permet de laisser le lot précédemment constitué poursuivre son déplacement vers l'aval à la vitesse de défilement.

Conformément aux enseignements de ce document, un tel phaseur est utilisé pour constituer une succession de lots qui sont chacun formés d'au moins deux produits regroupés longitudinalement l'un derrière l'autre, c'est-à-dire de produits alignés de manière à former une colonne s'étendant selon la direction longitudinale de convoyage.

Toutefois, la constitution de tels lots dits "en colonne" ne convient pas à toutes les applications, par exemple lorsque la machine d'encaissage empile les lots de produits dans des caisses ou cartons d'emballage selon une orientation différente ou encore lorsque l'orientation est imposée par la forme du produit.

On distingue ainsi, par opposition aux lots de produits regroupés longitudinalement "en colonne", des lots de produits regroupés "en rang" qui sont constitués de produits regroupés transversalement les uns à côtés des autres, c'est-à-dire disposés de front sensiblement sur une même ligne.

En effet, les regroupements en rang des produits des lots sont par exemple préférés lorsque les produits présentent une forme oblongue, plus longue que large, et qu'ils sont de plus orientés sur le tapis de convoyage dans le sens de la longueur selon la direction longitudinale de défilement d'amont vers l'aval.

L'invention vise notamment à remédier aux inconvénients de l'état de la technique en proposant une solution simple, économique, efficace et permettant tout particulièrement de constituer à très haute cadence des lots de produits regroupés en rang.

Dans ce but, l'invention propose un agencement du type décrit précédemment, caractérisé en ce que le phaseur comporte au moins une courroie d'entraînement qui porte au moins le taquet et qui est agencée du côté de la face supérieure du tapis, en ce que la courroie est enroulée sur au moins deux poulies d'entraînement de manière qu'un brin inférieur de la courroie s'étende sensiblement parallèlement à la face supérieure du tapis, le taquet occupant des positions engagées lorsqu'il est situé sur le brin inférieur, et en ce que le phaseur comporte des moyens pour entraîner les poulies en rotation de manière que la vitesse longitudinale d'entraînement du taquet vers l'aval par la courroie en position engagée soit égale à une vitesse déterminée dite de ralentissement, inférieure à la vitesse de défilement, afin d'aligner transversalement les produits en rang pour former le lot.

Avantageusement, le phaseur est commandé sélectivement de manière que son fonctionnement soit indépendant des éventuels écarts ou fluctuations des valeurs des espacements amont entre les produits.

Selon d'autres caractéristiques de l'invention :
- le taquet est commandé depuis sa position engagée vers sa position escamotée lorsque l'espacement entre les deux produits du lot atteint une valeur déterminée sensiblement nulle ;
- la courroie comporte un état de fonctionnement passif dans lequel elle est arrêtée, chaque taquet occupant une position escamotée d'attente, et un état de fonctionnement actif dans lequel la courroie est entraînée en rotation autour des poulies de manière qu'un taquet se déplace longitudinalement vers l'aval en position engagée, et pour chaque lot à former, la courroie est commandée dans son état actif lorsqu'un produit déterminé, tel que le premier produit, est détecté par un capteur, en amont du phaseur ;
- le phaseur comporte une première et une seconde courroie similaires qui sont agencées en parallèle et qui sont entraînées indépendamment, et en ce que chaque courroie est commandée dans son état actif avant la fin de l'état actif de l'autre courroie, de manière que la constitution d'un nouveau lot commence avant que le lot aval précédent ait été relâché ;

- lorsque les deux courroies sont à l'état passif, les positions d'attente des taquets de la première courroie sont décalées par rapport aux positions d'attente des taquets de la seconde courroie, de manière à empêcher un croisement des taquets des deux courroies ;
- chaque courroie porte au moins deux taquets mais similaires qui sont régulièrement espacés le long de la courroie de manière que, pour chaque courroie, un seul taquet à la fois puisse occuper une position engagée ;
- l'agencement comporte un dispositif de regroupement à alvéoles qui est agencé à la sortie du tapis, chaque alvéole étant prévue pour contenir un lot de produits et pour acheminer ce lot vers un poste de traitement en aval ;
- l'agencement comporte un dispositif d'éjection comportant des moyens, tels qu'un jet d'air comprimé, qui sont agencés en amont et/ou en aval du phaseur.

D'autres caractéristiques et avantages de l'invention apparaîtront à la lecture de la description détaillée qui suit pour la compréhension de laquelle on se reportera aux dessins annexés dans lesquels :
- les figures 1A et 1B sont respectivement une vue de côté et une vue de dessus qui représentent schématiquement un agencement selon un premier mode de réalisation de l'invention comportant un phaseur agencé au-dessus d'un tapis de convoyage ;
- les figures 2A et 2B sont respectivement une vue de côté et une vue de dessus qui représentent schématiquement le phaseur de la figure 1 lorsque la courroie est à l'état passif ;
- les figures 3A et 3B sont des vues similaires à celles de la figure 2 qui représentent le phaseur lorsque la courroie est à l'état actif au début de l'engagement d'un taquet avec un produit pour constituer un lot de deux produits ;
- les figures 4A et 4B sont des vues similaires à celles de la figure 2 qui représentent le phaseur lorsque la courroie est à l'état actif juste avant que le lot de produits soit lâché ;
- les figures 5A et 5B sont des vues similaires à celles de la figure 2 qui représentent le phaseur lorsque la courroie est à l'état passif juste après que le lot de produits ait été lâché et juste avant l'engagement d'un taquet avec un nouveau produit ;
- la figure 6 est une vue en perspective qui représente schématiquement un agencement comportant un phaseur selon un second mode de réalisation équipé d'une première et d'une seconde courroie en parallèle ;
- la figure 7 est une vue en perspective qui représente le phaseur de la figure 6 de manière plus détaillée ;
- la figure 8 est une vue similaire à celle de la figure 2 qui représente le phaseur de la figure 6 lorsque les deux courroies sont à l'état passif ;
- la figure 9 est une vue similaire à celle de la figure 8 qui représente le phaseur lorsque la première courroie est à l'état actif au début de l'engagement d'un taquet avec un produit, la seconde courroie étant à l'état passif ;
- la figure 10 est une vue similaire à celle de la figure 8 qui représente le ralentissement du produit par le taquet de la première courroie et la position d'attente amont d'un taquet de la seconde courroie ;
- la figure 11 est une vue similaire à celle de la figure 8 qui représente un premier lot de produits regroupés en rang avant qu'il soit lâché par le taquet de la première courroie et qui représente le début de l'engagement d'un taquet de la seconde courroie avec un produit ;
- la figure 12 est une vue similaire à celle de la figure 8 qui représente la première courroie à l'état passif et la seconde courroie à l'état actif ;
- la figure 13 est vue de dessus d'une installation de conditionnement illustrant un exemple de mise en oeuvre de l'agencement selon l'invention.

Pour la description de l'invention, on adoptera à titre non limitatif afin d'en faciliter la compréhension, les orientations verticale, longitudinale et transversale selon le repère V, L, T indiqué aux figures.

Dans la description qui va suivre, des éléments identiques, similaires ou analogues seront désignés par les mêmes chiffres de référence.

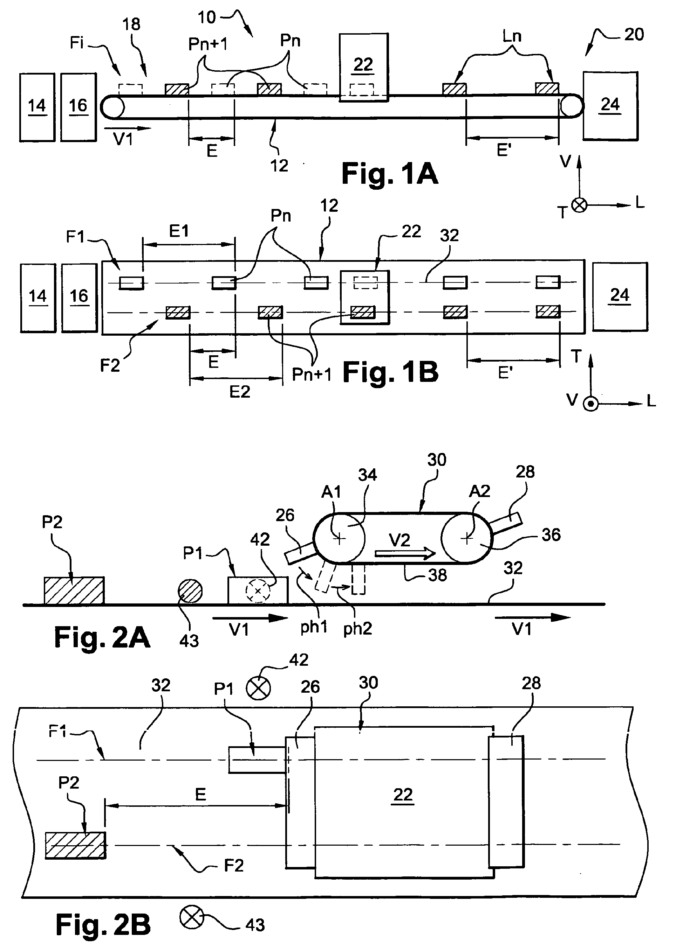

Sur les figures 1A et 1B, on a représenté schématiquement un agencement 10 pour le regroupement en rang de produits Pn, Pn+1 sous forme de lots Li.

L'agencement 10 comporte un tapis 12 de convoyage qui défile suivant une direction longitudinale orientée de l'amont vers l'aval, ce qui correspond à une orientation générale de la gauche vers la droite sur les figures 1 à 12.

L'agencement 10 comporte un dispositif d'alimentation 14, tel qu'un tapis, qui est destiné à alimenter le tapis 12 de convoyage en produits Pn, Pn+1.

Avantageusement, l'agencement 10 comporte un dispositif de répartition 16 susceptible de distribuer les produits Pn, Pn+1 sur la surface du tapis 12 avec une séquence de distribution déterminée, les moyens (non représentés) du dispositif de répartition 16 étant de préférence intégrés au dispositif d'alimentation 14.

Le tapis 12 achemine les produits Pn, Pn+1 depuis une zone d'arrivée 18 située en amont jusqu'à une zone de sortie 20 située en aval.

Le tapis 12 possède une vitesse de défilement V1, sensiblement constante, à laquelle sont entraînés tant les produits Pn que les produits Pn+1 qui sont posés sur la surface horizontale supérieure du tapis 12.

Comme cela est représenté sur la figure 1B, les produits Pn, Pn+1 sont disposés sur la surface supérieure du tapis 12 de convoyage suivant au moins deux files longitudinales, respectivement une première file F1 et une deuxième file F2, qui sont globalement parallèles entre elles et déphasées l'une par rapport à l'autre, c'est-à-dire dont les produits Pn, Pn+1 sont décalées longitudinalement entre eux d'une file à l'autre.

Sur les figures, les produits Pn+1 de la deuxième file F2 ont été hachurés afin de permettre de les différencier des produits Pn de la première file F1 .

Toutefois, les produits Pn et les produits Pn+1, ici représentés schématiquement par des boîtes parallélépipédiques, sont de préférence des produits identiques qui ne diffèrent donc que par celle des files Fi à laquelle ils appartiennent.

Par définition, un "espacement" correspond dans la suite de la présente description à la distance longitudinale comprise entre l'extrémité aval d'un premier produit Pn ou Pn+1 appartenant ici respectivement à une première file F1 ou une deuxième file F2 donnée et l'extrémité aval d'un second produit Pn ou Pn+1 situé immédiatement en amont du premier produit Pn, Pn+1 appartenant soit à la même file F1, F2, soit à l'autre file parallèle à celle comportant le premier produit Pn ou Pn+1.

Par conséquent, l'espacement (ou pas) correspond ici à la distance comprise entre chaque face verticale aval d'une boîte parallélépipédique correspondant à un produit Pn de la première file F1 et/ou à un produit Pn+1 de la deuxième file F2.

Par définition, un "produit" Pn ou Pn+1 au sens de l'invention n'est pas nécessairement constitué uniquement d'un seul produit mais peut aussi être constitué d'un ensemble de plusieurs produits, notamment d'un lot de produits, l'ensemble étant défini par rapport au phaseur 22 ou au dispositif de regroupement 24.

Par définition, l'indice "n" est ici un nombre impair supérieur ou égal à un de sorte que la première file F1, dite file impaire, est constituée des produits P1, P3, P5 ... Pn tandis que la deuxième file F2, dite file paire, est constituée des produits P2, P4, P6 ... Pn+1, les produits Pn, Pn+1 étant respectivement destinés à être regroupés en un rang correspondant chacun à un lot Li.

Un lot Li est ainsi formé lorsque le lot comporte un regroupement constitués d'au moins un produit Pn et un produit Pn+1 qui sont alignés l'un à côté de l'autre, de manière à former un rang (ou une rangée), orienté ici selon une direction transversale, c'est-à-dire orthogonalement à la direction longitudinale de convoyage.

Par conséquent, pour des lots Li comportant par exemple deux produits, le lot L1 est constitué du regroupement en rang des produits P1 et P2, le lot L2 de celui des produits P3 et P4, etc.

Des moyens de phasage comportant au moins un phaseur 22, conforme aux enseignements de l'invention, sont agencés sur le trajet des produits Pn, Pn+1 , entre la zone d'arrivée 18 et la zone de sortie 20, de manière à constituer successivement lesdits lots Li.

L'agencement 10 comporte un phaseur 22 qui est positionné verticalement au dessus du tapis 12.

De préférence, le phaseur 22 est centré sur ie tapis 12 par rapport à la première file F1 et à la deuxième file F2 de manière à être susceptible d'agir respectivement sur les produits Pn et Pn+1 que comporte chacune des files F1, F2.

Avantageusement, le phaseur 22 est monté mobile transversalement de manière à pouvoir en régler la position en fonction notamment de la distance transversale ou écartement entre la première file F1 de produits Pn et de la deuxième file F2 de produits Pn+1.

Avantageusement, les produits impairs Pn arrivent, en amont du phaseur 22, dans la première file F1 avec un espacement amont E1 entre chacun des produits Pn.

De la même manière, les produits pairs Pn+1 arrivent, en amont du phaseur 22, dans la deuxième file F2 avec un espacement amont E2 entre chacun des produits Pn+1.

De préférence, l'espacement amont E1 entre deux produits Pn successifs et l'espacement amont E2 entre deux produits Pn+1 successifs sont constants et correspondent respectivement à une valeur minimale de consigne.

Les produits Pn et les produits Pn+1 sont décalés selon la direction longitudinale, c'est à dire déphasés entre eux d'une file F1 à l'autre file F2 d'un espacement amont E déterminé correspondant au moins à une valeur minimale de consigne.

Dans l'exemple représenté pour illustrer l'invention aux figures 1A et 1B, on a choisi de manière non limitative des valeurs d'espacement E1 et E2 sensiblement identiques, afin notamment de faciliter la compréhension du principe de fonctionnement du phaseur 22 selon l'invention.

De plus, chacun des produits Pn ou Pn+1 est positionné d'une file F1 à l'autre F2 selon une séquence de distribution déterminée particulière, ici une distribution en quinconce avec une alternance d'un produit sur deux.

Ainsi, chacun des produits Pn formant la première file F1 se trouve décalé longitudinalement d'un espacement amont E par rapport au produit Pn+1 de la deuxième file F2 qui lui succède directement.

Le décalage entre les produits Pn et Pn+1 de chacune des files F1 et F2 correspond donc à une répartition alternée en quinconce de manière que, en amont du phaseur 22, le produit P2 de la deuxième file F2 se trouve sensiblement à égale distance du produit P1 situé sur la première file F1 et du produit P3 situé sur la même file F2, c'est-à-dire respectivement des produits Pn et Pn+1 les plus proches, l'un aval le précédant sur la première file F1 et l'autre amont le suivant sur la deuxième file F2 suivant le sens de défilement du tapis 12 de convoyage.

Bien entendu, la séquence de répartition des modes de réalisation représentés n'est donnée qu'à titre d'exemple nullement limitatif et, en variante, les valeurs des espacements amont E1, E2 et E peuvent être différentes.

Avantageusement, le phaseur 22 est susceptible, pour chaque application, de s'adapter à la séquence de distribution déterminée selon laquelle les produits Pn et Pn+1 arrivent dans la zone d'entrée 18, ou encore de réaliser en aval du phaseur 22 d'autres types de lot Li à partir de produits Pn et Pn+1 repartis transversalement sur le tapis 12 en au moins deux files Fi distinctes.

Dans les modes de réalisation représentés pour illustrer l'invention, le phaseur 22 est destiné à constituer des lots Li du type "en rang" comportant deux produits Pn et Pn+1 regroupés transversalement côte à côte.

Les lots Li formés sortent ensuite du phaseur 22 avec un espacement aval E' entre deux lots Li successifs.

De manière connue, les lots Li sont par exemple collectés, dans la zone de sortie 20, par un dispositif de regroupement, dit regroupeur 24, qui transfère les lots Li vers un poste de traitement (non représenté) en aval, tel qu'une machine d'encaissement.

Avantageusement, le phaseur 22 comporte au moins un taquet 26, 28 escamotable qui est commandé successivement entre :
- au moins une position engagée dans laquelle le taquet 26, 28 s'interpose, par contact, devant un produit Pn de l'une F1 des files F1, F2 en vue de le ralentir jusqu'à ce qu'il soit rejoint par au moins un autre produit Pn+1 situé immédiatement en amont sur l'autre F2 des files, de manière à former un lot Li constitués des produits Pn et Pn+1 regroupés l'un à côté de l'autre en un rang transversal,
- au moins une position escamotée qui permet de laisser le lot Li formé précédemment poursuivre son déplacement vers l'aval à la vitesse V1 de défilement.

Avantageusement, le phaseur 22 comporte donc au moins un taquet 26, 28 escamotable qui est susceptible de ralentir l'un Pn des produits Pn, Pn+1 de manière que ledit produit Pn soit rattrapé par le produit Pn+1 le suivant afin de former, lorsqu'ils se sont rejoints, un lot Li constitué d'au moins deux produits Pn et Pn+1 disposés en rang côté à côte sur chacune des files F1 et F2.

Un premier mode de réalisation de l'invention comportant un phaseur 22 est schématisé sur les figures 2A à 5B.

Le phaseur 22 comporte une courroie 30 qui est agencée du côté de la face supérieure 32 du tapis 12 et qui est susceptible d'entraîner en déplacement au moins taquet.

De préférence, la courroie 30 comporte ici deux taquets 26, 28, en variante trois taquets ou plus selon les applications.

La courroie 30 est enroulée sur une poulie amont 34 et sur une poulie aval 36 d'axes A1, A2 transversaux, par rapport à la direction longitudinale.

Les deux poulies 34, 36 sont ici agencées au-dessus du tapis 12 de manière que le brin inférieur 38 de la courroie 30 s'étende sensiblement parallèlement à la face supérieure 32 du tapis 12, et de manière que les taquets 26, 28 soient sensiblement centrés transversalement par rapport aux files F1 et F2 du tapis 12 et soient aptes à agir sur les produits Pn et les produits Pn+1 des files F1 et F2.

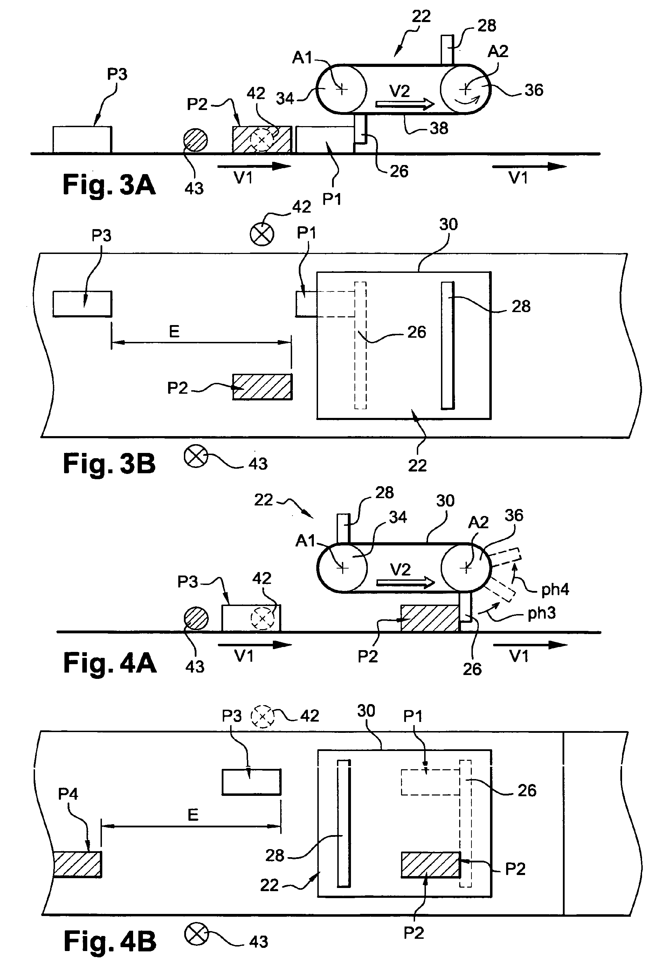

La poulie aval 36 est prévue pour être entraînée en rotation au moyen d'un servomoteur 40 de manière à entraîner la courroie 30 en rotation autour des poulies 34, 36, et de manière que le brin inférieur 38 se déplace dans le même sens que le tapis 12. A cet effet, la poulie aval 36 est entraînée en rotation dans le sens anti-horaire, en considérant les figures 3A et 4A.

La courroie 30 porte, sur sa face extérieure, un premier 26 et un second 28 taquets similaires qui sont agencés à des positions sensiblement opposées le long de la courroie 30.

La mise en mouvement de la courroie 30 autour des poulies 34, 36 entraîne donc les taquets 26, 28 en déplacement.

Chaque taquet 26, 28 a ici globalement la forme d'une plaque transversale perpendiculaire à la portion de courroie 30 qui la porte.

En variante, la forme et les matériaux utilisés pour la fabrication des taquets 26, 28 sont susceptibles de varier notamment en fonction du type de produit traité.

La hauteur du brin inférieur 38 de la courroie 30 et/ou la hauteur de chaque taquet 26, 28, par rapport à la face supérieure 32 du tapis 12, est telle que, lorsqu'un taquet 26, 28 se situe sur le brin inférieur 38, il constitue un obstacle au passage des produits Pn de la première file F1 et/ou des produits Pn+1 de la deuxième file F2, ce qui correspond à une position dite engagée du taquet 26, 28.

Lorsqu'un taquet 26, 28 occupe une position engagée, le taquet 26, 28 opposé occupe une position escamotée, ce qui est par exemple le cas sur les figures 3A et 4A où le premier taquet 26 occupe une position engagée et où le second taquet 28 occupe une position escamotée.

Les taquets 26, 28 peuvent aussi occuper des positions intermédiaires, représentées sur les figures 3A à 5A, lorsqu'ils se situent sur les portions enroulées de la courroie 30.

Sur la figure 2A, la position intermédiaire occupée par le premier taquet 26 est dite position d'attente amont et la position intermédiaire occupée par le second taquet 28 est dite position d'attente aval. Ces positions d'attente sont respectivement des positions escamotées.

En position d'attente amont, le premier taquet 26 est situé à hauteur de la poulie amont 34. Il est proche d'une position engagée mais suffisamment incliné vers l'amont pour ne pas gêner le passage des produits Pn de la première file F1 ou des produits Pn+1 de la deuxième file F2 sous le brin inférieur 38 de la courroie 30.

En position d'attente aval, le second taquet 28 est situé à hauteur de la poulie aval 36 et il ne peut par conséquent interférer ou faire obstacle lors du passage des produits Pn et/ou des produits Pn+1 sous le brin inférieur 38.

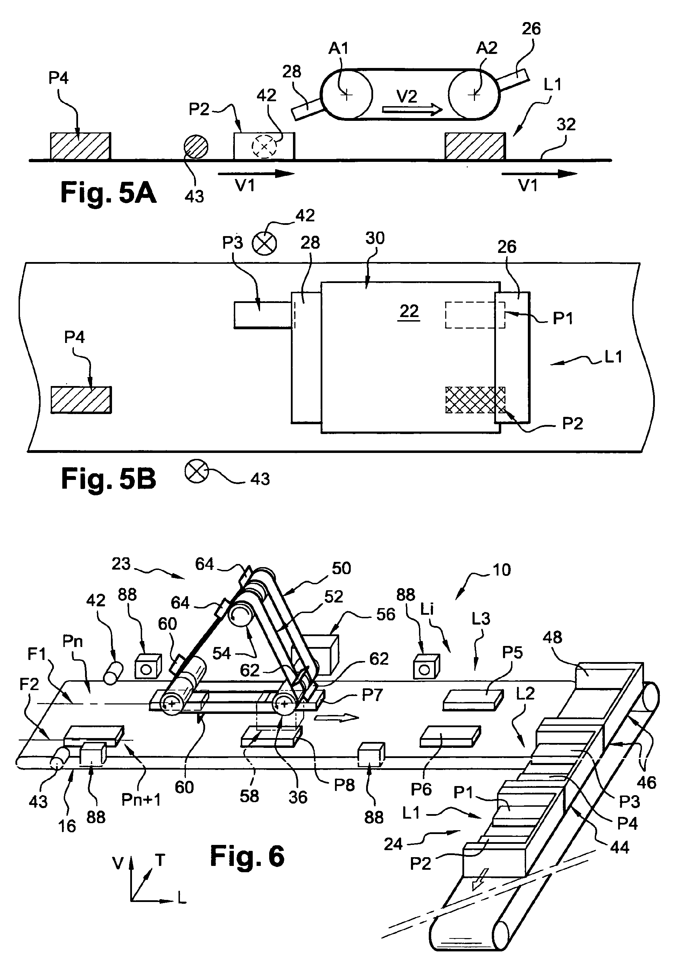

Sur la figure 5A, les deux taquets 26, 28 occupent des positions inversées par rapport à la figure 2A, le second taquet 28 occupant une position d'attente amont et le premier taquet 26 occupant une position d'attente aval.

Conformément aux enseignements de l'invention, la courroie 30 est commandée successivement dans un état passif et dans un état actif.

Dans son état passif, qui est illustré par les figures 2A et 5A, la courroie 30 est arrêtée et les taquets 26, 28 occupent leurs positions d'attente.

Dans l'état actif de la courroie 30, qui est illustré par les figures 3A et 4A, le servomoteur 40 entraîne la courroie 30 en rotation autour des poulies 34, 36, ce qui provoque un déplacement longitudinal des taquets 26, 28 au dessus du tapis 12, à une vitesse dite de ralentissement V2 qui est inférieure à la vitesse de défilement V1 du tapis 12.

De préférence, la vitesse de ralentissement V2 est sensiblement constante et correspond à la vitesse longitudinale VL de déplacement des taquets 26, 28.

En considérant les figures 2A à 5A, le premier taquet 26 se déplace vers l'aval, depuis sa position d'attente amont jusqu'à sa position d'attente aval, et le second taquet 28 se déplace vers l'amont, depuis sa position d'attente aval jusqu'à sa position d'attente amont.

Au cours du déplacement du premier taquet 26 vers l'aval, celui-ci occupe des positions engagées.

Avantageusement, la courroie 30 est commandée dans son état actif et dans son état passif en fonction des signaux émis par des moyens de détection 42, par exemple par un capteur, qui sont agencés entre la zone d'arrivée 18 et le phaseur 22, et qui sont susceptibles de détecter l'arrivée d'un produit sur le tapis 12.

Avantageusement, l'entraînement de la courroie 30 et le déplacement des taquets 26, 28 du phaseur 22 est donc commandé sélectivement en fonction de la détection des produits grâce à quoi le phaseur 22 fonctionne indépendamment des écarts ou fluctuations pouvant survenir dans les valeurs des espacements amont E1, E2 ou E entre les produits Pn et/ou Pn+1.

Le capteur 42 est ici susceptible de détecter de préférence les produits Pn de la première file F1.

En variante, le capteur 42 est susceptible de détecter les produits Pn de la première file F1 et/ou les produits Pn+1 de la deuxième file F2, et est agencé au dessus de la surface 32 du tapis 12.

Le capteur 42 est constitué, par exemple, par une cellule électrique qui est agencée au bord du tapis 12 adjacent à la première file F1 et qui est reliée électriquement au servomoteur 40, de sorte que la détection d'un produit déterminé, tel que le premier produit P1, sur le tapis 12 déclenche la mise en marche du servomoteur 40 à l'instant adéquat.

On note que l'agencement 10 selon l'invention peut être équipé d'un codeur (non représenté) qui mesure précisément la distance parcourue par le tapis 12 à partir d'un signal de détection, tel que celui émis par le capteur 42 pour un produit Pn.

Grâce au codeur la position longitudinale du produit Pn détecté par le capteur 42, par rapport au phaseur 22, est connue précisément, ce qui assure le déclenchement du servomoteur 40 à l'instant adéquat.

Avantageusement, l'agencement 10 comporte dans le premier mode de réalisation un dispositif d'alimentation 14 et un dispositif de répartition 16 grâce auxquels au moins l'espacement amont E entre le produit P1 détecté par le capteur 42 et le produit P2 a une valeur constante déterminée.

Avantageusement, l'espacement amont E2 a, comme l'espacement E, une valeur constante déterminée.

Avantageusement, grâce au capteur 42, on synchronise la commande de l'entraînement de la courroie 30 du phaseur 22 avec la détection de produit Pn, Pn+1 de manière que le phaseur 22 est susceptible de traiter indifféremment des produits ayant une valeur d'espacement E1, E2 ou E constante ou surtout variable.

Cette caractéristique de fonctionnement sélectif est particulièrement avantageuse pour permettre un fonctionnement fiable de l'agencement 10 selon l'invention à haute cadence, par exemple au-delà de 900 produits par minute.

Les paramètres de fonctionnement du phaseur 22, en particulier la vitesse de ralentissement V2, sont déterminés en fonction des autres paramètres pour chaque application.

En effet, la vitesse de ralentissement V2 est déterminée de manière que le produit P1 de la première file F1 parcourant la distance longitudinale, dite de ralentissement, comprise entre les positions engagées amont et aval d'un taquet 26, 28, le produit P2 de la deuxième file F2 parcoure simultanément à la vitesse de défilement V1 une distance longitudinale correspondant à la somme de ladite distance de ralentissement et de l'espacement amont E.

La distance de ralentissement correspond donc globalement à l'entraxe A1-A2 du phaseur 22 ou à la longueur du brin 38 de la courroie 30 de sorte que, outre la détermination de la vitesse de ralentissement V2, la distance de ralentissement est aussi susceptible d'être réglée notamment en modifiant la longueur de la courroie 30 avec un entraxe A1-A2 réglable ou la position relative des taquets 26, 28.

De préférence, l'agencement 10 comporte d'autres moyens de détection 43, tels qu'au moins un capteur et/ou un codeur, dits seconds moyens, qui sont associés à la deuxième file F2 et qui sont notamment susceptibles de détecter l'arrivée d'un produit Pn+1 de la deuxième file F2 sur le tapis 12 et/ou de mesurer précisément la distance parcourue par le tapis 12 à partir d'un signal de détection, tel que celui émis par un capteur 43 pour un produit Pn+1.

Avantageusement, les premiers et seconds moyens de détection 42, 43 sont aptes à détecter respectivement les produits Pn de la première file F1 et les produits Pn+1 de la deuxième file F2 et à déterminer l'espacement amont E entre chacun d'eux de manière à fournir des signaux susceptibles d'être exploités en temps réel pour la commande du phaseur 22.

Avantageusement, il est possible de déterminer par comparaison des signaux émis respectivement par les moyens de détection 42 et 43 si la valeur de l'espacement amont réel E entre le produit Pn de la file F1 et le produit Pn+1 de la file F2 est supérieure ou égale à la valeur de consigne déterminée.

On décrira ci-après en détail le fonctionnement du phaseur 22 selon le premier mode de réalisation.

Alors que la courroie 30 est dans un état passif où le premier taquet 26 occupe sa position d'attente amont (figure 2A), le capteur 42 détecte l'arrivée d'un produit P1 de la première file F1, dit premier produit.

Le signal de détection émis par le capteur 42 provoque la mise en marche du servomoteur 40 de sorte que la courroie 30 passe de son état passif à son état actif, et de sorte que le premier taquet 26 passe de sa position d'attente amont à sa position engagée, comme représenté sur les figures 3A et 4A.

Le premier taquet 26 est alors entraîné longitudinalement vers l'aval, à la vitesse de ralentissement V2.

Comme la vitesse de ralentissement V2 du premier taquet 26 est inférieure à la vitesse de défilement V1 du premier produit P1, le premier produit P1 rejoint le premier taquet 26 et vient en butée contre la face transversale amont de celui-ci, ce qui provoque un glissement du premier produit P1 de la première file F1 sur le tapis 12.

Le premier produit P1 se déplace alors longitudinalement à la vitesse de ralentissement V2 imposée par le premier taquet 26, jusqu'à ce que le premier taquet 26 vienne occuper une position escamotée.

On note que, lors du passage de la courroie 30 de l'état passif à l'état actif, la mise en marche du servomoteur 40 comporte une phase préalable d'accélération ph1, qui permet à la courroie 30 de passer d'une vitesse longitudinale d'entraînement VL nulle à une vitesse longitudinale d'entraînement VL stabilisée égale à la vitesse de ralentissement V2.

De préférence, la position d'attente amont est choisie de manière que le premier taquet 26 atteigne une position intermédiaire d'engagement à la fin de la phase d'accélération ph1, avant qu'il ait atteint sa première position engagée verticale.

Sur la figure 2A, on a représenté en trait interrompu fin la position intermédiaire d'engagement et en trait interrompu fort la première position engagée verticale du premier taquet 26.

La phase de déplacement du premier taquet 26 entre la position intermédiaire d'engagement et la première position engagée verticale est dite phase d'engagement ph2.

L'instant de déclenchement du servomoteur 40 est par exemple calé par rapport au signal du capteur 42 de manière que le premier produit P1, arrivant à la vitesse V1 de défilement, vienne en contact de manière synchrone avec le premier taquet 26 pendant la phase d'engagement ph2.

Ainsi, lorsque le premier taquet 26 occupe sa première position engagée verticale, le premier produit P1 est bloqué en appui contre le premier taquet 26, ce qui est illustré par la figure 3A.

Dès lors, bloqué en appui contre le premier taquet 26, le premier produit P1 se déplace longitudinalement à la vitesse de ralentissement V2.

Le second produit P2 est ici constitué par le premier produit de la deuxième file F2, c'est-à-dire qui suit directement le premier produit P1 par rapport à un référentiel fixe, tel que le capteur 42, et qui est situé immédiatement à un espacement amont E déterminé du premier produit P1.

Comme le second produit P2 de la deuxième file F2 se déplace toujours sur le tapis 12 à la vitesse de défilement V1 l'espacement amont E va progressivement diminuer jusqu'à atteindre une valeur nulle lorsqu'il rejoint le premier produit P1 pour se retrouver lui aussi bloqué en appui contre le premier taquet 26 et par conséquent aligné transversalement en rang avec celui-ci.

Selon l'exemple de réalisation décrit et représenté, la vitesse de ralentissement V2 et l'entraxe A1-A2 entre les deux poulies 34, 36 sont donc choisis en fonction de la vitesse de défilement V1 et en fonction de l'espacement amont E entre les produits Pn de la première file F1 et les produits Pn+1 de la deuxième file F2.

Ainsi, le second produit P2 rejoint normalement le premier produit P1 immédiatement avant que le premier taquet 26 passe de sa position engagée à sa position escamotée, c'est-à-dire globalement à hauteur de la poulie aval 36, ce qui est plus particulièrement illustré par la figure 4A.

Avantageusement, le basculement du taquet 26 vers sa position escamotée s'effectue donc lorsque, le produit P2 ayant rejoint le produit P1, le premier lot L1 en rang est formé.

Tel sera toujours le cas dès lors que la valeur réelle de l'espacement E sera inférieure ou égale à la valeur minimale de consigne de l'espacement amont E.

Toutefois, tel ne sera pas le cas si la valeur réelle de l'espacement E est en revanche supérieure à la valeur minimale de consigne de l'espacement amont E.

En effet, la valeur minimale de consigne de l'espacement amont E correspond donc à une valeur maximale au-delà de laquelle le second produit P2 ne peut rejoindre le premier produit P1 pour former le lot L1.

Dans ce cas, le premier produit P1 est susceptible d'être libéré par le basculement du taquet 26 avant que les produits P1 et P2 n'aient pu être alignés transversalement l'un à côté de l'autre pour former le lot L1.

C'est la raison pour laquelle, lorsque l'agencement 10 comporte un capteur 42 ou 43 susceptible d'émettre un signal représentatif de la position réelle du produit P2, un tel signal est alors avantageusement exploité pour prévenir le cas d'un écart de position entre les produits Pn de la première file F1 et les produits Pn+1 de la deuxième file F2 présentant une valeur E supérieure à ladite valeur minimale de consigne déterminée.

De préférence, le signal du capteur 43 est susceptible d'être utilisé pour synchroniser, avec la position réelle du produit P2, le passage du premier taquet 26 en contact avec le premier produit P1 de sa position engagée à sa position escamotée.

En fonction de la valeur réelle de l'espacement E, on commande l'entraînement de la courroie 30 pour réaliser une temporisation et immobiliser le taquet 26 avant son basculement depuis sa position engagée jusqu'à sa position escamotée.

On comprendra cependant qu'une telle temporisation ne peut être réalisée avec un phaseur 22 que si elle n'est pas susceptible de provoquer un dysfonctionnement tel que la mise en indisponibilité temporaire du second taquet 28 alors que le produit Pn suivant aurait été détecté.

Néanmoins, si une telle temporisation n'est pas possible, on peut par exemple procéder en aval du phaseur 22 à l'élimination des produits P1 et P2 ou encore procéder à l'alignement transversal des produits P1 et P2 au moyen d'un autre phaseur identique disposé en aval et fonctionnant de manière analogue, comme cela sera illustré ultérieurement.

Dans les autres cas, en rejoignant le premier produit P1 avant le basculement du taquet 26, le second produit P2 forme alors systématiquement avec celui-ci un premier lot L1, ledit premier lot L1 étant ici constitué de seulement deux produits P1 et P2.

En variante, le lot Li comporte plus de deux produits, en généralisant on comprendra qu'un rang formant un lot Li comporte autant de produits côte à côte que de file Fi.

Comme représenté sur la figure 4B, les produits P1 et P2 du lot L1 sont regroupés transversalement l'un à côté de l'autre de manière former un rang et sont alignés selon une direction transversale, qui est orthogonale à la direction longitudinale de convoyage.

En arrivant à hauteur de la poulie aval 36, le premier taquet 26 s'escamote et vient occuper sa position d'attente aval, représentée sur la figure 5A. La courroie 30 passe alors de son état actif à son état passif.

Le basculement du premier taquet 26 d'une ultime position engagée verticale, qui est représentée en trait continu sur la figure 4A, à une position intermédiaire de dégagement, qui est représentée en trait interrompu fin sur la figure 4A, est appelé phase de dégagement ph3.

Avantageusement, lorsque l'agencement 10 comporte des seconds moyens de détection 43, la phase de dégagement du premier taquet 26 vers sa position escamotée est alors susceptible d'être accélérée ou au contraire ralentie (temporisation) selon que la valeur réelle détectée de l'espacement amont E, différente de la valeur de consigne déterminée, soit respectivement inférieure ou supérieure à celle-ci.

Lorsque le premier taquet 26 se trouve dans son ultime position engagée verticale, les produits P1 et P2 sont alors regroupés en rang l'un à côté de l'autre de sorte que le premier lot L1 est constitué.

Le premier produit P1 du lot L1 est alors relâché par le premier taquet 26 au cours de la phase de dégagement ph3, ce qui permet aux produits P1 et P2 formant le lot L1 de poursuivre leur course longitudinale vers l'aval à la vitesse de défilement V1.

La fin de la phase de dégagement ph3 correspond au début d'une phase dite de décélération ph4, au cours de laquelle la vitesse longitudinale d'entraînement VL de la courroie 30 passe de la vitesse de ralentissement V2 à une vitesse nulle, et au cours de laquelle le premier taquet 26 passe de sa position intermédiaire de dégagement à sa position d'attente aval, qui est représentée en trait interrompu fort sur la figure 4A.

Le phaseur 22 a ainsi effectué un premier cycle complet correspondant à la formation du premier lot L1 par regroupement sur un même rang transversal des produits P1 et P2 défilant chacun respectivement sur les première et deuxième files F1, F2 du tapis 12 de convoyage.

Comme illustré par la figure 5A, le second taquet 28 occupant sa position d'attente amont, le phaseur 22 est alors prêt à former un nouveau lot Li de produits Pn, Pn+1, soit le lot L2.

Avantageusement, la vitesse de ralentissement V2 et l'entraxe A1-A2 entre les poulies amont 34 et aval 36 sont choisis de manière que l'espacement amont E entre les deux produits P1, P2 diminue, sous le phaseur 22, jusqu'à atteindre une valeur nulle, correspondant à l'alignement transversal du premier produit P1 et du second produit P2 sur un même rang.

Grâce à l'agencement 10 selon l'invention, il est possible de conserver une vitesse de défilement V1 particulièrement élevée, car pour constituer le lot Li le produit Pn ou le produit Pn+1 sont uniquement ralentis et non pas temporairement arrêtés avec une vitesse longitudinale VL nulle comme auparavant avec les moyens de phasage selon l'état de la technique.

C'est la raison pour laquelle l'invention permet d'atteindre des hautes cadences, par exemple comprise entre 900 et 1100 produits par minute, selon le type de produit, soit des cadences qui sont très supérieures à celles atteintes auparavant avec les solutions de l'état de la technique.

L'invention trouve à s'appliquer avec tous types de produits mais est cependant particulièrement avantageuse pour certains types de produits, dits non accumulables, par exemple des produits en sachets qui ne possèdent pas de surfaces d'appui rigides définissant des points de contact précis entre les produits.

De plus, le regroupement des produits Pn et Pn+1 en lot Li est réalisé sans perturber la position des produits, ni modifier l'orientation des produits.

On constate par ailleurs que la valeur de l'espacement aval E' entre deux lots Li à la sortie du phaseur 22 est sensiblement égale à la voleur de l'espacement amont E2 entre les produits Pn+1 de la deuxième file F2.

Ainsi, la valeur minimale de consigne de l'espacement amont E2 entre les produits Pn+1 de celle F2 des files F1, F2 qui n'est pas traitée par le phaseur 22, est avantageusement déterminée de manière que les lots Li soient suffisamment espacés pour laisser le temps au regroupeur 24 de traiter chaque lot Li, en particulier lorsque l'agencement 10 fonctionne à des cadences élevées.

Un exemple de regroupeur 24 du type à alvéoles est représenté sur la figure 6, en relation avec un second mode de réalisation de l'agencement 10 selon l'invention.

Ce regroupeur 24 convient bien entendu aussi au premier mode de réalisation dans lequel il pourrait indifféremment être mis en oeuvre.

Le regroupeur 24 comporte un train 44 d'alvéoles 46 qui est mobile suivant une direction globalement transversale, par rapport au tapis 12, c'est-à-dire suivant la direction dans laquelle les produits Pn, Pn+1 sont regroupés en rang pour former les lots Li.

Chaque alvéole 46 délimite un logement 48 en forme d'encoche qui est ouvert du côté du tapis 12 pour pouvoir recevoir un lot Li dans la zone de sortie 20.

Le train 44 d'alvéoles 46 se déplace transversalement par à-coups, de manière qu'il y ait toujours une alvéole 46 vide en regard de l'extrémité aval du tapis 12, dans l'attente de l'arrivée d'un lot Li.

Dès qu'un lot Li vient remplir le logement 48 de l'alvéole 46 vide, le train 44 d'alvéoles 46 se décale d'une alvéole 46, pour pouvoir recevoir le lot Li suivant.

Grâce à la mise en lot Li des produits Pn, Pn+1 en amont du regroupeur 24 au moyen d'agencement 10 selon l'invention, il est possible de garantir que le regroupeur 24 disposera d'un intervalle ou laps de temps minimum nécessaire pour décaler le train 44 d'alvéoles 46 et présenter une alvéole 46 vide devant le lot Li suivant.

On note que, si l'agencement 10 était dépourvu du phaseur 22 selon l'invention, la cadence d'arrivée des produits Pn, Pn+1 devrait être nécessairement ralentie, en l'occurrence au moins divisée par deux dans le cas d'une séquence de distribution en quinconce d'un produit sur deux.

En effet, sans l'intervention du phaseur 22, le regroupeur 24 ne dispose alors que d'un intervalle de temps insuffisant pour effectuer le décalage du train 44 d'alvéoles 46, ledit intervalle de temps correspondant par exemple ici à l'espacement amont E diminué de la longueur d'un produit, c'est-à-dire à la distance longitudinale de l'espacement amont entre le produit P2 de la deuxième file F2 entrant dans l'alvéole 46 pour y former le lot L1 avec le produit P1 s'y trouvant et le produit P3 de la première file F1 lui succédant, à laquelle on aura soustrait ici la longueur du produit P2.

Par conséquent, le produit P3 viendrait alors heurter le produit P1 ou une partie du regroupeur 24 avant que le décalage du train 44 d'alvéoles 46 n'ait pu être complètement effectué.

Dans le premier mode de réalisation de l'agencement 10 selon l'invention, c'est plus particulièrement la valeur de consigne de l'espacement amont E1 ou E2 entre deux produits successifs de la première file F1 ou de la deuxième file F2 diminuée de la longueur d'un produit Pn ou Pn+1 qui correspond à l'intervalle de temps minimum nécessaire pour effectuer le décalage du train 44 d'alvéoles 46 permettant d'en optimiser le fonctionnement et d'atteindre de haute cadence.

On décrira maintenant, par comparaison avec le premier mode de réalisation, un second mode de réalisation de l'agencement 10 selon l'invention comportant un phaseur 23 perfectionné qui est représenté aux figures 6 à 12.

Le phaseur 23 se difféerencie de celui du premier mode de réalisation principalement par le fait qu'il comporte deux courroies 50, 52 similaires agencées en parallèle, et par le fait que chaque courroie 50, 52 est enroulée autour d'une troisième poulie 54 qui est agencée au-dessus du brin inférieur 38 associé et au-dessus des poulies amont 34 et aval 36 associées.

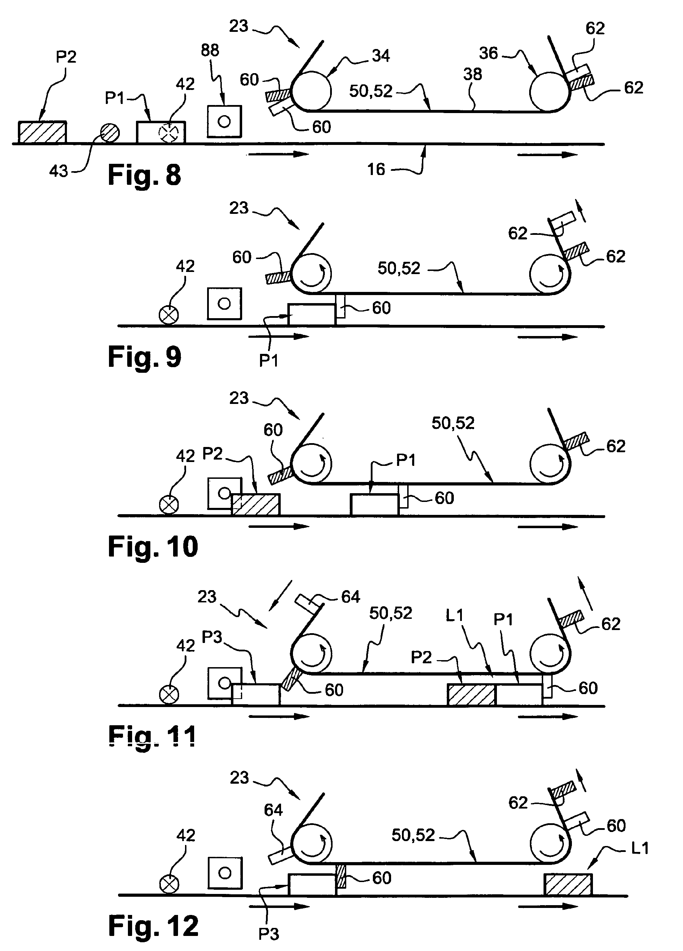

Sur les figures 8 à 12, les deux courroies 50, 52 sont vues de manière superposée.

La première 50 et la seconde 52 courroies sont agencées côte à côte, de manière sensiblement symétrique par rapport à un plan vertical longitudinal de symétrie constituant de préférence un plan médian du tapis 12 ainsi que des première et deuxième files F1, F2.

La première 50 et la seconde 52 courroies sont entraînées indépendamment, respectivement par un premier 56 et un second 58 servomoteurs.

Chaque courroie 50, 52 comporte ici un premier 60, un deuxième 62, et un troisième 64 taquet qui sont régulièrement espacés le long de la courroie 50, 52 et qui sont similaires aux taquets 26, 28 du premier mode de réalisation.

On note que le nombre de taquets 60, 62, 64 pourrait être différent, l'important étant qu'il y ait toujours un taquet 60, 62, 64 en position d'attente amont lorsqu'un produit, ici un produit Pn de la première file F1, est détecté par la cellule du capteur 42, et qu'il n'y ait pas deux taquets 60, 62, 64 d'une même courroie simultanément en position engagée.

De préférence, la surface de contact 66, ou surface d'engagement, de chaque taquet 60, 62, 64 avec les produits Pn est déportée transversalement vers la courroie 50, 52 opposée, de manière que cette surface de contact 66 soit globalement centrée transversalement par rapport au tapis 12 et plus précisément par rapport à la première file F1 de produits Pn et à la deuxième file F2 de produits Pn+1 de manière à pouvoir agir sur les produits Pn et sur les produits Pn+1.

Ceci permet de garantir un engagement avec les produits Pn et/ou Pn+1 sensiblement identique quel que soit le taquet 60, 62, 64 engagé et quelle que soit la courroie 50, 52 à l'état actif.

Les taquets 60, 62, 64 comportent ici des positions d'attente supplémentaires, par rapport aux positions décrites en référence au premier mode de réalisation.

Par exemple, en considérant la première courroie 50, lorsque le premier taquet 60 occupe sa position d'attente amont et que le deuxième taquet 62 occupe sa position d'attente aval, alors le troisième taquet 64 occupe une position d'attente médiane, située à mi-chemin entre la position d'attente aval et la position d'attente amont, au voisinage de la troisième poulie 54.

Sur la figure 8, le premier 60 et le deuxième 62 taquets de la première courroie 50 sont représentés respectivement dans leurs positions d'attente amont et aval.

Comme les taquets 60, 62, 64 des deux courroies 50, 52 ne peuvent pas occuper simultanément des positions identiques, lorsque le premier taquet 60 de la première courroie 50 occupe sa position d'attente amont, les taquets 60, 62, 64 de la seconde courroie 52, qui sont représentés avec des hachures sur les figures 8 à 12, occupent des positions d'attente décalées, par rapport aux positions d'attente des taquets 60, 62, 64 de la première courroie 50.

Ainsi, sur la figure 8, le premier taquet 60 de la seconde courroie 52 occupe une position d'attente amont décalée de quelques degrés d'angle de rotation de la poulie amont 34, par rapport à la position d'attente amont du premier taquet 60 de la première courroie 50.

De manière similaire, les deux autres taquets 62, 64 de la seconde courroie 52 sont décalés par rapport aux taquets 62, 64 correspondants de la première courroie 50.

Le principe de fonctionnement du second mode de réalisation est similaire au premier, mais il permet de traiter le flux de produits à une cadence plus rapide.

En effet, la présence d'une seconde courroie 52 permet de commencer la formation d'un second lot L2 avant que le premier lot L1 ait été relâché par la première courroie 50.

Sur la figure 8, le phaseur 23 est représenté à l'état passif, les taquets 60, 62, 64 occupant les positions d'attente décrites précédemment.

Le signal de détection émis par le capteur 42, lorsqu'il détecte un produit Pn, ici le premier produit P1 de la première file F1, provoque le passage de la première courroie 50 du phaseur 23 de son état passif à son état actif.

Le premier servomoteur 56 est mis en marche de sorte que le premier taquet 60 de la première courroie 50 passe de sa position d'attente amont à sa position engagée, qui est représentée sur la figure 9, et poursuit son déplacement jusqu'à sa position d'attente aval, qui est représentée sur la figure 12.

Peu après la mise en marche du premier servomoteur 56, ou simultanément, le second servomoteur 58 est mis en marche lui aussi, jusqu'à ce que le premier taquet 60 de la seconde courroie 52 vienne occuper sa position d'attente amont.

Dès que le premier taquet 60 de la seconde courroie 52 atteint sa position d'attente amont, le second servomoteur 58 est arrêté, dans l'attente de l'arrivée d'un troisième produit P3 de la première file F1, alors que la première courroie 50 est toujours entraînée, ce qui est illustré par la figure 10.

Le second produit P2 est situé sur la deuxième file F2 et immédiatement en amont du premier produit P1 de la première file F1 avec un espacement amont E dont la valeur va progressivement diminuer jusqu'à atteindre une valeur nulle.

En effet, le second produit P2 rejoint progressivement le premier produit P1 qui est ralenti par le premier taquet 60 de la première courroie 50 de manière à former un premier lot L1.

Peu avant l'escamotage du premier taquet 60 de la première courroie 50, le capteur 42 détecte l'arrivée d'un troisième produit P3 appartenant à la première file F1 ce qui déclenche la mise en marche du second servomoteur 58, la seconde courroie 52 passant alors de son état passif à son état actif.

Le premier taquet 60 de la seconde courroie 52 vient alors occuper une position engagée, qui est illustrée par la figure 11, de manière à ralentir le troisième produit P3 pour former avec un quatrième produit P4 de la deuxième file F2 un second lot L2.

Le second lot L2 se trouvant immédiatement en amont du premier lot L1 formé du regroupement en rang des produits P1 et P2, avec un espacement correspondant à l'espacement amont E2.

Le premier lot L1 étant constitué, le premier taquet 60 de la première courroie 50 s'escamote et vient occuper sa position d'attente aval, alors que le troisième taquet 64 associé vient occuper sa position d'attente amont, puis le premier servomoteur 56 est arrêté. La première courroie 50 est alors revenue dans son état passif, ce qui est illustré par la figure 12.

La première courroie 50 est de nouveau prête à traiter d'autres produits Pn de la première file F1 pour les ralentir et former les lots Li suivants.

Le premier taquet 60 de la seconde courroie 52 continue sont déplacement longitudinal, ce qui correspond à la situation de la première courroie 50 illustrée par la figure 9.

Le processus se répète ainsi pour chaque taquet 60, 62, 64 de chaque courroie 50, 52, en fonction de l'arrivée des produits Pn.

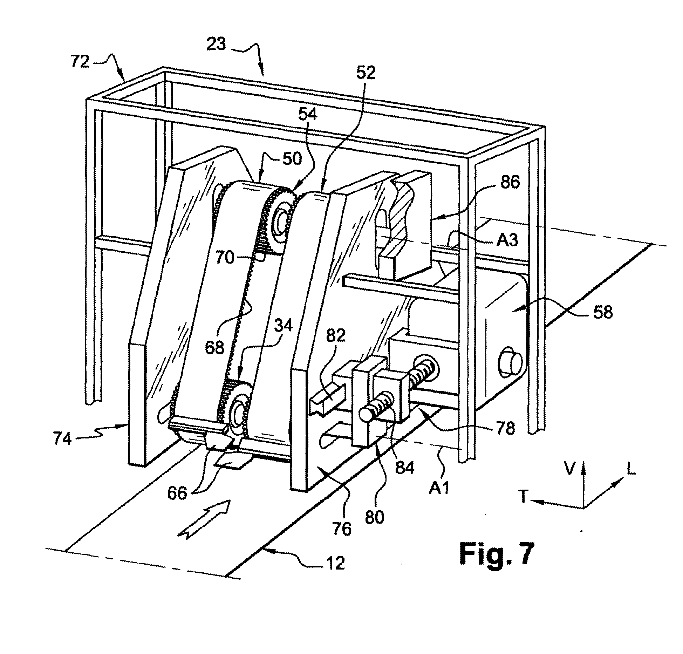

On décrira maintenant des caractéristiques avantageuses du mode réalisation préféré du phaseur 23 selon l'invention, notamment en relation avec la figure 7.

De préférence, la surface interne 68 des courroies 50, 52 est crantée pour coopérer avec des crans transversaux complémentaires portés par la surface axiale d'entraînement 70 des poulies 34, 36, 54.

Le phaseur 23 est porté par une armature en forme de portique 72 qui repose, par exemple, sur le sol (non représenté) et qui est fixe par rapport au tapis 12.

On note que le montage du phaseur 23 sur un portique 72 permet de l'agencer facilement au-dessus de n'importe quel tapis 12 de convoyage, et permet de choisir facilement sa position longitudinale entre les zones d'entrée 18 et de sortie 20.

Avantageusement, le phaseur 23 est monté mobile transversalement sur le portique 72 qui comporte des moyens de réglage (non représentés) de manière à permettre notamment de régler avec précision la position transversale du phaseur 23 par rapport à aux files F1, F2 de produits défilant sur le tapis 12.

En variante, le phaseur 23 est solidaire du portique 72 qui est monté mobile au moins transversalement par rapport au tapis 12, de préférence aussi longitudinalement et/ou verticalement.

Le portique 72 comporte, de part et d'autre du tapis 12, deux plaques 74, 76 longitudinales verticales qui supportent respectivement les poulies 34, 36, 54 associées à la première courroie 50 et les poulies 34, 36, 54 associés à la seconde courroie 52.

Avantageusement, le phaseur 23 comporte des moyens 78 pour le réglage de l'entraxe A1-A2 entre la poulie amont 34 et la poulie aval 36 de chaque courroie 50, 52.

Le réglage de l'entraxe A1-A2 permet notamment d'adapter la longueur du brin inférieur 38 de chaque courroie 50, 52, notamment par rapport à l'espacement amont E entre les produits Pn et Pn+1 des files F1, F2 ainsi que la dimension longitudinale des produits Pn, Pn+1.

Selon le mode de réalisation représenté ici, l'axe A1 de chaque poulie amont 34 est porté par un coulisseau 80 qui est mobile en translation sur un rail longitudinal 82 fixé sur la plaque 74, 76 de support associée.

Le déplacement longitudinal de chaque coulisseau 80 est commandé ici par une vis 84 de réglage fixée sur la plaque 74, 76 de support associée.

Avantageusement, le phaseur 23 comporte des moyens 86 pour le rattrapage de la tension de chaque courroie 50, 52.

Ces moyens 86 comportent, par exemple, un système à rail vertical et coulisseau (non représentés) permettant de déplacer l'axe A3 de la troisième poulie 54 en translation verticale, par rapport à la plaque 74, 76 de support associée.

Les moyens 86 de rattrapage de la tension peuvent fonctionner de manière automatique, par exemple au moyen d'un dispositif élastique qui sollicite verticalement l'axe A3 de la troisième poulie 54 vers le haut.

Bien entendu, un fonctionnement optimal et à haute cadence est obtenu lorsqu'au moins l'espacement amont E entre les produits Pn et les produits Pn+1 a une valeur constante déterminée et que les espacements E1 et E2 des produits de chacune des files F1 et F2 ont avantageusement aussi une valeur constante déterminée.

Toutefois, les valeurs des espacements amont E, E1 et E2 des produits Pn, Pn+1 sont en pratique soumis à des écarts de plus ou moins importants qui sont notamment imputables au convoyage ou encore à l'utilisation de dispositif de contrôle destinés à éliminer les produits non conformes, par exemple en raison de leur poids, provoquant par conséquent des "trous" dans les files de produits.

Selon une caractéristique particulièrement avantageuse de l'invention, le fonctionnement du phaseur 22, 23 n'est pas affecté par une telle fluctuation des valeurs des espacements amont E, E1 et E2 dès lors que la commande en déplacement de la courroie 30, 50, 52 et des taquets est réalisée sélectivement en fonction de la détection des produits.

On comprendra que de tels écarts sont en revanche susceptibles de provoquer des dysfonctionnements dans le regroupement des produits avec les solutions connues de l'état de la technique.

Selon une autre caractéristique avantageuse de selon l'invention, l'agencement 10 comporte un dispositif d'éjection 88 de produits Pn de la première file F1 et/ou des produits Pn+1 de la deuxième F2.

Avantageusement, un tel dispositif d'éjection 88 est par exemple mis en oeuvre pour traiter le cas particulier décrit précédemment selon lequel la valeur de l'écart dans l'espacement amont E est supérieure la valeur minimale de consigne associée.

De préférence, l'agencement 10 comporte au moins un dispositif d'éjection 88 de produits agencé en aval du phaseur 22, 23, notamment pour prévenir d'éventuels dysfonctionnements et éliminer tout lot de produits non conforme avant les alvéoles 46 du regroupeur 24.

De tels dysfonctionnement de l'agencement 10 sont par exemple dus à des espacements amont E1 entre les produits Pn de la file F1 et/ou à des espacements amont E2 entre les produits Pn+1 de la file F2 ou encore à des espacement amont E entre un produit Pn de la file F1 et un produit Pn+1 de la file F2 présentant des valeurs supérieures ou inférieures aux valeurs minimales de consigne déterminées qui, d'une manière générale, ne permettent pas de les regrouper en rang correctement l'un à côté de l'autre pour former le lot Li ou de procéder au décalage des alvéoles du regroupeur 24.

Le dispositif d'éjection 88 comporte, par exemple, des moyens (non représentés) pour produire un jet d'air comprimé apte à pousser un produit Pn de la première file F1 et/ou un produit Pn+1 de la deuxième file F2 transversalement hors du tapis 12.

De préférence, les moyens à jet d'air du dispositif d'éjection 88 sont agencés transversalement de part et d'autre des bords longitudinaux du tapis 12 et associés à chacune des files F1, F2.

Avantageusement, le dispositif d'éjection 88 comporte des moyens qui sont ici agencés en amont et en aval du phaseur 22, 23 du phaseur 22, 23.

Avantageusement, l'agencement 10 comporte des moyens (non représentés) de récupération des produits éjectés par le dispositif 88 hors du tapis 12.

De préférence, le dispositif d'éjection 88 est commandé en fonction du signal de détection produit par le capteur 42 associé à la première file F1 de sorte que, lorsque celui-ci détecte l'arrivée d'un produit Pn amont qui est trop proche ou trop éloigné du produit Pn situé immédiatement en aval, c'est-à-dire avec à un espacement amont E1 inférieur ou supérieur à la valeur de consigne, le dispositif d'éjection 88 provoque l'éjection du produit Pn amont hors du tapis 12.

De même, le dispositif d'éjection 88 est susceptible d'être commandé en fonction du signal de détection produit par l'autre capteur 43 associé à la deuxième file F2 de sorte que, lorsque celui-ci détecte l'arrivée d'un produit Pn+1 amont qui est trop proche ou trop éloigné du produit Pn+1 situé immédiatement en aval, c'est à dire à un espacement amont E2 inférieur ou supérieur à la valeur de consigne, le dispositif d'éjection 88 provoque l'éjection du produit Pn+1 amont hors du tapis 12.

De préférence, les dysfonctionnements relatifs aux espacements amont E1 ou E2 sont traités par les moyens du dispositif d'éjection 88 agencés en amont du phaseur.

Bien entendu, dès lors que les valeurs de l'espacement amont E1 et/ou de l'espacement amont E2 diffèrent des valeurs de consigne déterminées, l'espacement amont E se trouve lui aussi nécessairement affecté et ne peut être égal à sa valeur minimale de consigne.

De préférence, les dysfonctionnements relatifs à la valeur l'espacement amont E sont traités par les moyens du dispositif d'éjection 88 agencés en aval du phaseur lorsque les produits n'ont pas été éliminés par les moyens amont ou lorsque l'agencement comporte uniquement des moyens d'éjection 88 en aval du phaseur.

Avantageusement, les signaux de détection des capteurs 42, 43 sont donc utilisés pour contrôler que l'espacement amont E entre un produit Pn de la première file F1 et un produit Pn+1 de la deuxième file F2 est correct, c'est-à-dire inférieur ou égal à la valeur minimale de consigne.

A défaut, le dispositif d'éjection 88 est alors commandé pour provoquer l'éjection des produits Pn, Pn+1 concernés hors du tapis 12 pour éliminer tout risque de dysfonctionnement.

De préférence, si un produit Pn de la première file F1 destiné à constituer d'un lot Li est éjecté, alors le produit Pn+1 de la deuxième file F2 est aussi systématiquement éjecté de manière à éliminer l'ensemble des produits d'un lot Li et éviter qu'un lot Li incomplet ne soit transmis au regroupeur 24.

Réciproquement, si un produit Pn+1 de la deuxième file F2 est éjecté, alors le produit Pn de la première file F1 situé en aval est aussi éjecté pour éviter de transmettre au regroupeur 24 un lot Li non conforme.

Avantageusement, le phaseur 22, 23 attend l'arrivée des produits Pn, Pn+1 suivants dans les files F1, F2 pour procéder à ia formation d'un nouveau lot Li.

On évite ainsi que le premier produit P1 ou le second produit P2 du lot L1 ne pénètre seul dans l'alvéole 46 correspondante du regroupeur 24.

Avantageusement, le regroupeur 24 peut comporter des moyens (non représentés) pour détecter l'absence d'un lot Li de produits Pn, Pn+1 afin de ne pas commander le décalage des alvéoles 46 et d'attendre l'arrivée du prochain lot Li.

Le fonctionnement de l'agencement 10 selon l'invention peut ensuite continuer selon le schéma de fonctionnement normal décrit précédemment.

Selon la conception décrite et représentée aux premier et deuxième modes de réalisation, l'agencement 10 selon l'invention comporte un phaseur 22, 23 qui est centré transversalement par rapport aux files F1, F2.

Dans le cas d'un phaseur centré, l'alignement des deux produits Pn et Pn+1 l'un à côté de l'autre est assuré dès lors que chacun de ces produits Pn et Pn+1 coopère avec la face verticale amont du taquet avant ou au moment du basculement de ce dernier au cours de la phase de dégagement.

Selon une autre conception non représentée, l'agencement 10 comporte un phaseur 22, 23 qui est de préférence positionné verticalement au dessus du tapis 12 mais qui est centré sur l'une des files, par exemple la première file F1 de manière à agir uniquement sur les produits Pn qu'elle comporte.

Dans une telle conception, le taquet du phaseur 22, 23 n'est susceptible d'agir que sur les produits Pn de la première file et non plus sur les produits Pn+1 de la deuxième file F2.

Ainsi, le second produit P2 de la deuxième file F2 n'étant pas ralenti par le taquet du phaseur 22, 23 ou ne coopérant pas avec la face verticale amont de ce dernier, il traverse le tapis 12 depuis la zone d'entrée 18 jusqu'à la zone de sortie 20, y compris la zone intermédiaire du tapis 12 comportant le phaseur 22, 23, à une vitesse constante égale à la vitesse de défilement V1.

Par comparaison, le premier produit P1 de la première file F1 traverse lui aussi le tapis 12 depuis la zone d'entrée 18 jusqu'à la zone de sortie 20 avec une vitesse de défilement V1, à l'exception de la zone intermédiaire du tapis 12 comportant le phaseur 22, 23 où il est ralenti à la vitesse de ralentissement V2 de manière à annuler progressivement l'espacement amont E existant entre les produits Pn et Pn+1 et constituer ainsi un lot Li en rang.

Avantageusement, le phaseur 22, 23 est alors monté mobile transversalement de manière à pouvoir être agencé sélectivement au dessus de la première file F1 de produits Pn ou de la deuxième file F2 de produits Pn+1 en fonction des caractéristiques de la séquence de distribution des produits, notamment du produit, dit premier produit, et des espacements amont entre les produits de chaque file F1, F2 et d'une file à l'autre.

En variante, chacune des files F1 et F2 comporte un phaseur 22, 23 associé qui est susceptible d'être commandé sélectivement en fonction de la séquence déterminée de distribution de produits Pn, Pn+1 à traiter pour les regrouper successivement en lots Li.

De préférence, lorsque le phaseur 22, 23 est centré sur l'une F1 des files F1, F2, l'agencement 10 comporte des moyens de détection supplémentaires (non représentés), tels qu'au moins un capteur et/ou un codeur, qui sont susceptibles de détecter au moins l'arrivée et/ou la position d'un produit de l'autre F2 des files F1, F2 sur le tapis 12.

Avantageusement, le phaseur 22, 23 étant centré sur la première file F1 de produits Pn, le capteur supplémentaire est agencé légèrement en amont de l'axe A2 du phaseur de manière à produire un signal représentatif de la position déterminée d'un produit Pn+1 , tel que P2, de la deuxième file F2.

Avantageusement, ie signal fourni par les moyens de détection est susceptible d'être exploité en temps réel pour la commande du phaseur 22, 23, en particulier pour synchroniser la phase de dégagement ph3 du taquet, et obtenir un parfait alignement selon la direction transversale des produits Pn, Pn+1, par exemple du produit P2 avec le produit P1 formant le lot L1.

Selon une variante non représentée, l'agencement 10 est apte à constituer des lots Li regroupant en rang plus de deux produits Pn, par exemple un lot Li constitué par un rang comportant trois produits alignés transversalement les uns à côté des autres.

Pour cela, l'agencement 10 comporte un tapis 12 sur lequel défilent des produits repartis sur trois files F longitudinales et au moins un premier phaseur 22, 23 et un deuxième phaseur 22, 23 intervenant simultanément ou successivement sur deux des trois files de produits.

Dans le cas d'une séquence de répartition pour laquelle le premier produit P1 est, en considérant les produits des deux files F1, F2, le produit situé le plus en aval, les phaseurs 22, 23 sont alors agencés de manière que le premier phaseur regroupe préalablement en rang les produits P2 et P3 en ralentissant celui des deux produits qui est situé le plus en aval, puis que le deuxième phaseur agisse pour ralentir le premier produit P1 jusqu'à ce qu'il soit rejoint par les produits P2 et P3 situés immédiatement en amont et que soit finalement constitué un lot Li regroupant en rang les trois produits P1, P2, P3.

L'agencement 10 selon l'invention ne nécessite pas de tapis 12 spécifique, ce qui permet de minimiser les coûts et ce qui permet, par exemple, de modifier une installation existante à peu de frais pour la rendre apte à traiter des produits à haute cadence.

On décrira ci-après un exemple de mise en oeuvre dans une installation 90 de conditionnement de produits d'un agencement 10 selon l'Invention comportant des moyens de phasage tels qu'un phaseur 22 ou un phaseur 23 selon l'un des modes de réalisation décrits précédemment.

L'installation 90 de conditionnement de produits est destinée à regrouper des produits en lot Li, notamment en vue de acheminer lesdits lots de produits jusqu'à une machine d'encaissage (non représentée).

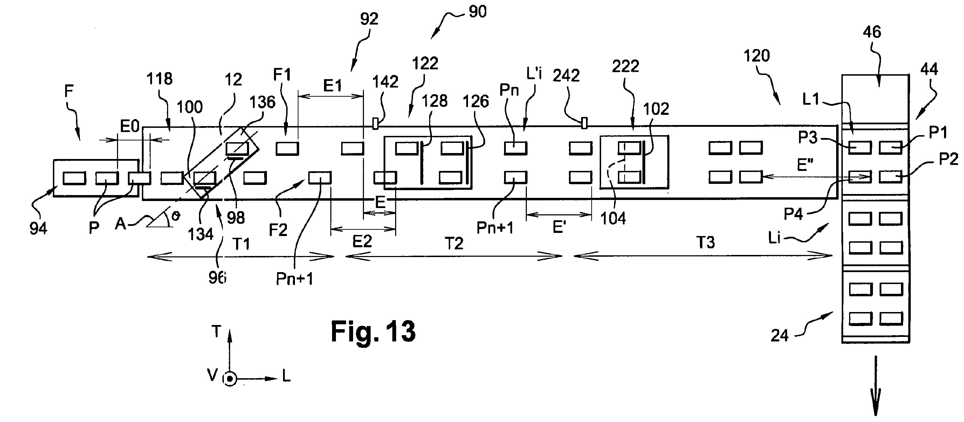

On a représenté à la figure 13, une installation 90 de conditionnement comportant une ligne de convoyage 92 qui s'étend longitudinalement suivant un tapis de convoyage 112 sur lequel défilent de l'amont vers l'aval les produits P à acheminer.

L'installation 90 comporte successivement d'amont en aval un dispositif d'alimentation 14 en produits de la ligne de convoyage 92, un dispositif de répartition 16 des produits, un dispositif de regroupement des produits en lot Li comportant au moins des premiers moyens de phasage 122 et des seconds moyens de phasage 222.

Dans cet exemple, les lots Li comportent quatre produits P qui sont regroupés de manière à s'inscrire globalement dans un carré, soit un lot Li formé respectivement de deux rangs de deux produits ou encore de deux colonnes de deux produits.

Le dispositif d'alimentation 14 comporte ici un tapis d'alimentation 94 qui achemine une file F de produits P séparés longitudinalement d'un espacement amont E0 jusqu'à une zone d'entrée 118 du tapis de convoyage 112.

Un dispositif de répartition 16 est agencé, en aval de la zone d'entrée 118, sur un premier tronçon amont T1 du tapis de convoyage 112 pour distribuer les produits P de la file F sur la face supérieure 132 du tapis 112 selon une séquence de distribution déterminée.

Avantageusement, le dispositif de répartition 16 comporte un phaseur 96 comportant au moins un taquet, ici deux taquets 98, 100, et qui est agencé par rapport au tapis 112 de manière à distribuer les produits P de la file F pour former au moins une première file F1 de produits P, désignés ci-après Pn, et une deuxième file F2 de produits P, désignés ci-après Pn+1, qui est parallèle à la première file F1.

Le phaseur 96 est similaire au phaseur 22 décrit par exemple pour le premier mode de réalisation et représenté aux figures 2 à 5 et en diffère essentiellement par sa position en oblique par rapport à la direction longitudinale de défilement du tapis 112 et par à la position des taquets 98, 100 qui se déplacent transversalement, ici de la droite vers la gauche.

Avantageusement, le phaseur 96 comporte pour entraîner les taquets 98, 100, une courroie qui est enroulée entre une poulie droite 134 et une poulie gauche 136 d'axes A1-A2, un axe principal A qui est défini comme l'axe parallèle à la courroie du phaseur et orthogonal aux axes A1-A2 des poulies.

La position oblique du phaseur 96 est définie par l'axe principal A dont l'intersection avec la direction longitudinale de défilement du tapis 112 forme un angle aigu θ.

Les deux poulies sont agencées au dessus du tapis 112 de manière que le brin inférieur de la courroie s'étende sensiblement parallèlement à la face supérieure 132 du tapis 112 et de manière que les taquets 98, 100 s'étendent parallèlement à la direction longitudinale de défilement du tapis 112, soit avec un angle θ par rapport l'axe principal A du phaseur 96.

La poulie droite est susceptible d'être entraînée en rotation au moyen d'un servomoteur apte à entraîner la courroie portant les taquets 98, 100 en rotation autour des poulies dans le même sens que le tapis 112 et avec une vitesse d'entraînement V des taquets 98, 100 déterminée de manière que la composante longitudinale VL de la vitesse d'entraînement soient sensiblement égale à la vitesse de défilement V1 du tapis 112.

La séquence de distribution des produits en aval du phaseur 96 est ici analogue à celle représentée précédemment pour les premier et deuxième modes de réalisation, à savoir une distribution en quinconce avec une alternance d'un produit sur deux.

Ainsi, la première file F1 est constituée de produits Pn positionnés avec un espacement amont E1 entre deux produits P1, P3, P5 etc. successifs et la deuxième file F2 est constituée de produits Pn+1 positionnés avec un espacement amont E2 entre deux produits P2, P4, P6 etc. successifs.

Les première et deuxième files F1 et F2 déphasées entre elles présentent un espacement amont E entre deux produits Pn, Pn+1 successifs appartenant respectivement à chacune des files F1, F2.

Les produits Pn de la file F1 et les produits Pn+1 de la file F2 ainsi répartis en quinconce parcourent alors un second tronçon intermédiaire T2 du tapis 112 comportant les premiers moyens de phasage constitués par un phaseur 122.

Avantageusement, le phaseur 122 est structurellement identique à l'un ou l'autre des phaseurs 22, 23 décrits respectivement aux premier et deuxième modes de réalisation et ne sera donc pas décrit en détail ci-après.

Le phaseur 122 comporte un taquet 126 et un taquet 128 qui sont entraînés à une vitesse de ralentissement V2 par un servomoteur dont la mise en marche est avantageusement commandée en fonction du signal de détection d'un capteur 142.

Le fonctionnement du phaseur 122 est analogue de sorte que, en aval du phaseur 122, les produits Pn, Pn+1 des files F1 et F2 sont regroupés en rang de manière à former des lots L'i, dits lots intermédiaires, comportant respectivement un produit Pn et un produit Pn+1 regroupés transversalement l'un à côté de l'autre.

Les lots intermédiaires L'i parcourent ensuite un troisième tronçon aval T3 du tapis 112 comportant les seconds moyens de phasage 222.

Les seconds moyens de phasage 222 sont ici destinés à regrouper deux lots intermédiaires L'i constitués précédemment par les premiers moyens de phasage 122 pour former un lot Li.

Les seconds moyens de phasage 222 comportent au moins un phaseur de préférence identique à l'un ou l'autre des phaseurs 22, 23 décrits respectivement aux premier et deuxième modes de réalisation ou encore tels que décrits de la demande de brevet précitée FR N°05 50528 à laquelle on se reportera pour de plus amples détails.

Le phaseur 222 est agencé au dessus du tapis 112 et est centré par rapport aux files F1 et F2.

Le phaseur 222 comporte respectivement au moins un premier taquet 102 et un second taquet 104, par exemple analogues aux taquets 26, 28 du phaseur 22.

Lorsque les produits P1, P2 formant le premier lot intermédiaire L'i arrivent de front, ils sont avantageusement détectés par des moyens de détection, tels qu'un capteur 242, qui commande de manière synchrone la mise en marche du servomoteur du phaseur 222.

Le premier taquet 102 passe alors de sa position d'attente amont (état passif) à sa position engagée (état actif) dans laquelle il est entraîné longitudinalement vers l'aval à une vitesse de ralentissement V'2.

Comme la vitesse de ralentissement V'2 est inférieure à la vitesse de défilement V1, les premier produit P1 et deuxième produit P2 formant le premier lot intermédiaire L'1 rejoignent le taquet 102 du phaseur 222 et viennent en butée contre la face transversale amont de celui-ci provoquant par conséquent un glissement des produits P1, P2 sur le tapis 112 à une vitesse V'2 jusqu'à ce que ledit taquet 102 atteigne sa position escamotée.

Le premier produit P1 et le second produit P2 sont alors progressivement rejoints par les produits P3 et P4 du lot intermédiaire L'i suivant, appartenant respectivement aux première et deuxième files F1, F2, et qui, en aval du phaseur 122 et en amont du phaseur 222, sont initialement séparés par un espacement E' qui est égal à l'espacement amont E2 entre les produits Pn+1 de la deuxième file F2.

En effet, l'espacement E' entre les produits P1 et P2 du lot L'1 d'une part et les produits P3 et P4 du lots L'2 d'autre part va progressivement diminuer sous le phaseur 222 jusqu'à atteindre un valeur déterminée non nulle, les produits P1 et P2 étant avantageusement relâchés avant que les produits P3 et P4 ne viennent en contact avec eux afin d'éviter tout risque de chevauchement.

Grâce à l'invention, on constitue ainsi un lot final L1 comportant ici quatre produits P1, P2, P3 et P4 qui sont regroupés deux par deux en rang et en colonne.

Avantageusement, dans la zone de sortie 120 du tapis 112 située en aval du phaseur 222, l'espacement aval E" entre deux lots Li est sensiblement égal à deux fois la valeur de l'espacement E' entre les lots intermédiaires L'i.

Avantageusement, l'installation de conditionnement 90 comporte successivement des premiers moyens de phasage 122 et des seconds moyens de phasage 222 lorsque la différence entre la vitesse de défilement V1 du tapis et les vitesses de ralentissement des moyens de phasage requises pour former les lots L'i ou Li est importante, par exemple lorsque la vitesse de défilement V1 est deux fois supérieure à la vitesse de ralentissement nécessaire.

En variante, l'installation de conditionnement 90 comporte uniquement des premiers moyens de phasage 122 dont les caractéristiques comme la longueur de la courroie, la position des taquets ou encore la vitesse de ralentissement V2 sont déterminées de manière que le regroupement en rang des premier et second produits P1, P2 puis le regroupement des produits suivants P3 et P4 s'opèrent sous le brin inférieur du phaseur 122.

L'installation de conditionnement 90 comporte, en aval de la zone de sortie 120 du tapis de convoyage 112, un regroupeur 24 comportant un train 144 d'alvéoles 146 qui est mobile selon la direction transversale et dont les alvéoles 146 sont ouvertes en direction du tapis 112.

Le premier lot L1 vient remplir une des alvéoles 146 vide, puis le train 144 se décale d'une alvéole pour recevoir le lot L2 suivant afin que les lots Li de produits soient par exemple acheminés par le regroupeur 24 jusqu'à une machine d'encaissage.

Avantageusement, l'invention concerne aussi un procédé de regroupement en rang de plusieurs produits Pn, Pn+1 sous forme de lots Li, notamment en vue de permettre leur encaissement, les produits Pn, Pn+1 étant transportés par un tapis 12 de convoyage qui défile à une vitesse déterminée V1, dite de défilement, les produits Pn, Pn+1 arrivant du côté amont du tapis 12 en étant disposés suivant au moins deux files longitudinales parallèles F1, F2 comportant respectivement des produits Pn et des produits Pn+1 qui, d'une file F1 à l'autre F2, sont décalés entre eux d'au moins un espacement amont E déterminé et sortant du côté aval du tapis 12 par lots Li comportant au moins deux produits Pn, Pn+1.

Le procédé de regroupement consiste en au moins :
- une étape de ralentissement au cours de laquelle au moins un produit, dit premier produit P1, situé sur l'une F1 des files F1, F2 est ralenti sur le tapis 12, par rapport à un second produit P2 situé immédiatement en amont sur l'autre F2 des files, sans modifier la vitesse V1 de défilement du tapis, au moins jusqu'à ce que l'espacement E entre le second produit P2 et le premier produit P1 atteigne une valeur nulle, de manière à former un lot L1 constitués par le regroupement en rang des produits P1 et P2, c'est-à-dire regroupés l'un à côté de l'autre et alignés selon une direction transversale qui est orthogonale à la direction longitudinale de convoyage, et
- une étape de lâcher au cours de laquelle on relâche au moins le produit P1 ralenti est relâché de manière que le lot L1 formé des produits P1 et P2 poursuive son déplacement vers l'aval à la vitesse V1 de défilement du tapis 12.

Bien entendu, l'invention n'est nullement limitée aux modes de réalisation décrits et représentés.

En variante, la courroie du phaseur n'est pas entraînée séquentiellement en fonction d'un signal de détection commandant la mise en marche du servomoteur mais en continue à une vitesse de ralentissement V2 constante qui est déterminée en fonction notamment de l'espacement amont E1 entre les produits Pn et de l'espacement amont E entre les produits Pn et Pn+1 des files F1 et F2.

En variante, le regroupeur 24 comporte un train 44 dont les alvéoles 46 sont destinées à être chacune remplie non par un lot Li comportant plusieurs produits mais par un des produits regroupés en rang formant le lot Li.

Lorsque le produit Pn de la première file F1 et le produit Pn+1 de la deuxième file F2 préalablement regroupés transversalement en rang par le phaseur 22, 23 arrivent de front dans la zone de sortie 120, chacun des produits Pn, Pn+1 est reçu dans une alvéole 46 se trouvant longitudinalement en vis-à-vis, chaque alvéole 46 étant centrée sur l'une des files F1 ou F2.

On remplit donc simultanément deux alvéoles 46 adjacentes de sorte que le train 44 d'alvéoles 46 se décale d'un pas correspondant à deux alvéoles 46 afin de présenter deux alvéoles 46 vides pour recevoir respectivement les produits Pn, Pn+1 du lot Li suivant.

En variante, la courroie du phaseur 22, 23 est entraînée en sens opposé par rapport au tapis de convoyage 12 de manière que les taquets 26, 28 se déplacent de l'aval vers l'amont à une vitesse V qui est avantageusement supérieure à la vitesse de défilement V1 du tapis 12.

Le taquet 26 du phaseur 22 est par exemple susceptible de faire glisser un produit Pn de la file F1 sur la face supérieure du tapis 12 de manière à accélérer le produit Pn pour qu'il rejoigne le produit Pn+1 se trouvant en aval et à réduire ainsi l'espacement amont E entre les deux produits Pn, Pn+1 successifs à une valeur déterminée qui est ici nulle.

## Revendications

1. Agencement (10) pour le regroupement de plusieurs produits (Pn, Pn+1) sous forme de lots (Li), dans lequel les produits (Pn, Pn+1) sont transportés sur au moins un tapis (12) de convoyage qui défile suivant une direction longitudinale, depuis une zone d'arrivée (18) amont vers une zone de sortie (20) aval, à une vitesse déterminée (V1) dite de défilement, dans lequel les produits (Pn, Pn+1) sont disposés longitudinalement sur le tapis suivant au moins une première file (F1) de produits et une deuxième file (F2) de produits parallèle à la première file (F1) et comportant respectivement des produits (Pn, Pn+1) qui, d'une file (F1) à l'autre file (F2), sont décalés longitudinalement entre eux d'au moins un espacement amont (E), et comportant des moyens de phasage (22, 23) qui, agencés sur le trajet des produits (Pn, Pn+1) entre la zone d'arrivée (18) et la zone de sortie (20), sont aptes à former des lots (Li, L1) constitués par le regroupement d'au moins deux produits (Pn, P1) et (Pn+1 , P2) en un rang transversal, les moyens de phasage (22, 23) comportant au moins un phaseur (22, 23) qui comporte au moins un taquet (26, 28, 60, 62, 64) commandé successivement entre :
- au moins une position engagée dans laquelle le taquet (26, 28, 60, 62, 64) s'interpose, par contact, devant un produit (Pn, P1) de l'une (F1) des files (F1, F2) en vue de le ralentir jusqu'à ce qu'il soit rejoint par au moins un autre produit (Pn+1 , P2) situé immédiatement en amont sur l'autre (F2) des files (F1, F2), et
- au moins une position escamotée qui permet de laisser le lot (Li, L1) formé précédemment poursuivre son déplacement vers l'aval à la vitesse (V1) de défilement.
**caractérisé en ce que** le phaseur (22, 23) comporte au moins une courroie (30, 50, 52) d'entraînement qui porte au moins le taquet (26, 28, 60, 62, 64) et qui est agencée du côté de la face supérieure (32) du tapis (12), **en ce que** la courroie (30, 50, 52) est enroulée sur au moins deux poulies (34, 36, 54) d'entraînement de manière qu'un brin inférieur (38) de la courroie (30, 50, 52) s'étende sensiblement parallèlement à la face supérieure (32) du tapis (12), le taquet (26, 28, 60, 62, 64) occupant des positions engagées lorsqu'il est situé sur le brin inférieur (38), et **en ce que** le phaseur (22, 23) comporte des moyens (40, 56, 58) pour entraîner les poulies (34, 36, 54) en rotation de manière que la vitesse longitudinale (VL) d'entraînement du taquet (26, 28, 60, 62, 64) vers l'aval par la courroie (30, 50, 52) en position engagée soit égale à une vitesse (V2) déterminée dite de ralentissement, inférieure à la vitesse de défilement (V1), afin d'aligner transversalement les produits (Pn) et (Pn+1) en rang pour former le lot (Li).

2. Agencement (10) selon la revendication 1, **caractérisé en ce que** le taquet (26, 28, 60, 62, 64) est commandé depuis sa position engagée vers sa position escamotée lorsque l'espacement entre les deux produits (Pn, Pn+1) du lot (Li) atteint une valeur déterminée sensiblement nulle.

3. Agencement (10) selon la revendication 2, **caractérisé en ce que** la courroie (30, 50, 52) comporte un état de fonctionnement passif dans lequel elle est arrêtée, chaque taquet (26, 28, 60, 62, 64) occupant une position escamotée d'attente, et un état de fonctionnement actif dans lequel la courroie (30, 50, 52) est entraînée en rotation autour des poulies (34, 36, 54) de manière qu'un taquet (26, 28, 60, 62, 64) se déplace longitudinalement vers l'aval en position engagée, et **en ce que**, pour chaque lot (Li) à former, la courroie (30, 50, 52) est commandée dans son état actif lorsqu'un produit déterminé, tel que le premier produit (P1), est détecté par un capteur (42), en amont du phaseur (22, 23).

4. Agencement (10) selon la revendication 3, **caractérisé en ce que** le phaseur (23) comporte une première (50) et une seconde (52) courroie similaires qui sont agencées en parallèle et qui sont entraînées indépendamment, et **en ce que** chaque courroie (50, 52) est commandée dans son état actif avant la fin de l'état actif de l'autre courroie (50, 52), de manière que la constitution d'un nouveau lot (Li) commence avant que le lot (Li) aval précédent ait été relâché.

5. Agencement (10) selon la revendication 4, **caractérisé en ce que**, lorsque les deux courroies (50, 52) sont à l'état passif, les positions d'attente des taquets (60, 62, 64) de la première courroie (50) sont décalées par rapport aux positions d'attente des taquets (60, 62, 64) de la seconde courroie (52), de manière à empêcher un croisement des taquets (60, 62, 64) des deux courroies (50, 52).

6. Agencement (10) selon l'une quelconque des revendications précédentes, **caractérisé en ce que** chaque courroie (30, 50, 52) porte au moins deux taquets (26, 28, 60, 62, 64) similaires qui sont régulièrement espacés le long de la courroie (30, 50, 52) de manière que, pour chaque courroie (30, 50, 52), un seul taquet (26, 28, 60, 62, 64) à la fois puisse occuper une position engagée.

7. Agencement (10) selon l'une quelconque des revendications précédentes, **caractérisé en ce qu'**il comporte un dispositif (24) de regroupement à alvéoles (46) qui est agencé à la sortie (20) du tapis (12), chaque alvéole (46) étant prévue pour contenir un lot (Li) de produits (Pn, Pn+1) et pour acheminer ce lot (Li) vers un poste de traitement en aval.

8. Agencement (10) selon l'une quelconque des revendications précédentes, **caractérisé en ce qu'**il comporte un dispositif d'éjection (88) comportant des moyens, tels qu'un jet d'air comprimé, qui sont agencés en amont et/ou en aval du phaseur (22, 23).

## Claims

1. An arrangement (10) for the grouping of several products (Pn, Pn+1) in the form of batches (Li), wherein the products (Pn, Pn+1) are transported on at least one conveyor belt (12) which runs in a longitudinal direction from an upstream entrance zone (18) to a downstream exit zone (20), at a determined speed (V1) called the traveling speed, wherein the products (Pn, Pn+1) are placed longitudinally on the conveyor belt in at least one first line (F1) of products and one second line (F2) of products parallel to the first line (F1) and comprising respectively products (Pn, Pn+1) which, from one line (F1) to the other line (F2), are offset longitudinally from one another by at least one upstream spacing (E), and comprising phasing means (22, 23) which, arranged on the path of the products (Pn, Pn+1) between the entrance zone (18) and the exit zone (20), are capable of forming batches (Li, L1) made up by the grouping of at least two products (Pn, P1) and (Pn+1, P2) in a transverse row, the phasing means (22, 23) comprising at least one phaser (22, 23) which comprises at least one stop (26, 28, 60, 62, 64) operated successively between:
- at least one engaged position in which the stop (26, 28, 60, 62, 64) is interposed, by contact, in front of a product (Pn, P1) of one (F1) of the lines (F1, F2) for the purpose of decelerating it until it is joined by at least one other product (Pn+1, P2) situated immediately upstream on the other (F2) of the lines (F1, F2), and
- at least one retracted position which makes it possible to let the previously-formed batch (Li, L1) to continue its movement downstream at the traveling speed (V1),
**characterized in that** the phaser (22, 23) comprises at least one drive belt (30, 50, 52) which supports at least the stop (26, 28, 60, 62, 64) and which is arranged on the side of the upper face (32) of the conveyor belt (12), **in that** the drive belt (30, 50, 52) is wound onto at least two drive pulleys (34, 36, 54) so that a lower strand (38) of the drive belt (30, 50, 52) extends substantially parallel to the upper face (32) of the conveyor belt (12), the stop (26, 28, 60, 62, 64) occupying engaged positions when it is situated on the lower strand (38), and **in that** the phaser (22, 23) comprises means (40, 56, 58) for rotating the pulleys (34, 36, 54) so that the longitudinal speed (VL) for driving the stop (26, 28, 60, 62, 64) downstream by the drive belt (30, 50, 52) in the engaged position is equal to a determined speed (V2) called the decelerated speed, less than the traveling speed (V1), in order to transversely align the products (Pn) and (Pn+1) in a row to form the batch (Li).

2. The arrangement (10) as claimed in claim 1, **characterized in that** the stop (26, 28, 60, 62, 64) is operated from its engaged position to its retracted position when the spacing between the two products (Pn, Pn+1) of the batch (Li) reaches a substantially zero determined value.

3. The arrangement (10) as claimed in claim 2, **characterized in that** the drive belt (30, 50, 52) comprises a passive operating state in which it is stopped, each stop (26, 28, 60, 62, 64) occupying a retracted standby position, and an active operating state in which the drive belt (30, 50, 52) is rotated about the pulleys (34, 36, 54) so that a stop (26, 28, 60, 62, 64) moves longitudinally downstream in the engaged position, and **in that**, for each batch (Li) to be formed, the drive belt (30, 50, 52) is operated into its active state when a determined product, such as the first product (P1), is detected by a sensor (42), upstream of the phaser (22, 23).

4. The arrangement (10) as claimed in claim 3, **characterized in that** the phaser (23) comprises a first drive belt (50) and a second drive belt (52) that are similar and that are arranged in parallel and that are driven independently, and **in that** each drive belt (50, 52) is operated into its active state before the end of the active state of the other drive belt (50, 52), so that the make-up of a new batch (Li) begins before the preceding downstream batch (Li) has been released.

5. The arrangement (10) as claimed in claim 4, **characterized in that**, when the two drive belts (50, 52) are in the passive state, the standby positions of the stops (60, 62, 64) of the first drive belt (50) are offset relative to the standby positions of the stops (60, 62, 64) of the second drive belt (52), so as to prevent the stops (60, 62, 64) of the two drive belts (50, 52) from crossing.

6. The arrangement (10) as claimed in any one of the preceding claims, **characterized in that** each drive belt (30, 50, 52) supports at least two similar stops (26, 28, 60, 62, 64) that are evenly spaced along the drive belt (30, 50, 52) so that, for each drive belt (30, 50, 52), only one stop (26, 28, 60, 62, 64) at a time can occupy an engaged position.

7. The arrangement (10) as claimed in any one of the preceding claims, **characterized in that** it comprises a grouping device (24) with cavities (46) which is arranged at the exit (20) of the conveyor belt (12), each cavity (46) being provided to contain a batch (Li) of products (Pn, Pn+1) and to transport this batch (Li) to a downstream processing station.

8. The arrangement (10) as claimed in any one of the preceding claims, **characterized in that** it comprises an ejection device (88) comprising means, such as a jet of compressed air, which are arranged upstream and/or downstream of the phaser (22, 23).

## Patentansprüche

1. Anordnung (10) zur Reiheneinteilung mehrerer Produkte (Pn, Pn+1) in Form von Chargen (Li), bei der die Produkte (Pn, Pn+1) auf mindestens einem Förderband (12) transportiert werden, das von einer Zuführungszone (18) zu einer Austrittszone (20) mit einer festgelegten Geschwindigkeit (V1), der sogenannten Durchlaufgeschwindigkeit, in Längsrichtung von oben nach unten durchläuft, wobei die Produkte (Pn, Pn+1) mindestens entlang einer ersten Reihe (F1) von Produkten und einer zweiten Reihe (F2) von Produkten, die parallel zu der ersten Reihe (F1) verläuft, auf dem Förderband in Längsrichtung angeordnet sind, und jeweils die Produkte (Pn, Pn+1) aufweisen, die von einer Reihe (F1) zu der anderen Reihe (F2) untereinander in Längsrichtung um mindestens einen vorgelagerten Zwischenraum (E) versetzt sind, und Einrichtungen der Phasenanordnung (22, 23) aufweisen, die - angeordnet an dem Durchlauf der Produkte (Pn, Pn+1) zwischen der Zuführungszone (18) und der Austrittszone (20) - Chargen (Li, L1) bilden, die aus der Einteilung von mindestens zwei Produkten (Pn, Pn1) und (Pn+1, P2) in eine quer verlaufende Reihe bestehen, wobei die Einrichtungen der Phasenanordnung (22, 23) mindestens einen Zeiger (phaseur) (22, 23) besitzen, der mindestens einen Anschlag (26, 28, 60, 62, 64) aufweist, welcher nacheinander zwischen den nachfolgenden Positionen gesteuert wird:
- mindestens einer eingerasteten Position, in der sich der Anschlag (26, 28, 60, 62, 64) durch Kontakt vor ein Produkt (Pn, Pn1) einer (F1) der Reihen (F1, F2) einschiebt, um sie zu verlangsamen, bis es von mindestens einem anderen Produkt (Pn+1, P2) eingeholt ist, das sich unmittelbar vor der anderen (F2) der Reihen (F1, F2) befindet, und
- mindestens einer eingefahrenen Position, die es erlaubt, dass sich die zuvor gebildete Charge (Li, L1) in Durchlaufgeschwindigkeit (V1) nach unten bewegen kann,
**dadurch gekennzeichnet, dass** der Zeiger (22, 23) mindestens einen Riemen (30, 50, 52) besitzt, der mindestens den Anschlag (26, 28, 60, 62, 64) aufnimmt, und der auf der Seite der Oberseite (32) des Förderbandes (12) angeordnet ist, und dass der Riemen (30, 50, 52) auf mindestens zwei Antriebsriemenscheiben (34, 36, 54) aufgewickelt ist, so dass ein unterer Trumm (38) des Riemens (30, 50, 52) im wesentlichen parallel zu der Oberseite des Bandes (12) verläuft, wobei der Anschlag (26, 28, 60, 62, 64) eingerastete Positionen einnimmt, wenn er sich an dem unteren Trumm (38) befindet, und dass der Zeiger (22, 23) Einrichtungen (40, 56, 58) aufweist, um die Riemenscheiben (34, 36, 54) zu drehen, so dass die Antriebsgeschwindigkeit des Anschlags (26, 28, 60, 62, 64) in Längsrichtung (VL) nach unten durch den Riemen (30, 50, 52) in eingerasteter Position gleich einer festgelegten Entschleunigung (V2) ist, die unter der Durchlaufgeschwindigkeit (V1) liegt, um die Produkte (Pn) und (Pn+1) quer verlaufend in Reihe auszurichten, um eine Charge (Li) zu bilden.

2. Anordnung (10) nach Anspruch 1, **dadurch gekennzeichnet, dass** der Anschlag (26, 28, 60, 62, 64) von seiner eingerasteten Position in seine eingefahrene Position betätigt wird, wenn Abstand zwischen den beiden Produkten (Pn, Pn+1) der Charge (Li) einen festgelegten Wert erreicht, der im Wesentlichen Null ist.

3. Anordnung (10) nach Anspruch 2, **dadurch gekennzeichnet, dass** der Riemen (30, 50, 52) einen passiven Betriebszustand aufweist, in dem er stillsteht, wobei jeder Anschlag (26, 28, 60, 62, 64) eine eingefahrene Warteposition einnimmt, und einen aktiven Betriebszustand aufweist, in dem der Riemen (30, 50, 52) um die Riemenscheiben (34, 36, 54) gedreht wird, so dass sich ein Anschlag (26, 28, 60, 62, 64) in Längsrichtung nach unten in die Eingriffsposition verschiebt, und dass der Riemen (30, 50, 52) - um jeweils eine Charge (Li) zu bilden - in seinen aktiven Zustand gesteuert wird, wenn ein bestimmtes Produkt, wie das erste Produkt (P1), von einem Sensor (42) - dem Zeiger (22, 23) vorgelagert - erfasst wird.

4. Anordnung (10) nach Anspruch 3, **dadurch gekennzeichnet, dass** der Zeiger (23) einen ersten (50) und einen zweiten ähnlichen (52) Riemen aufweist, die parallel angeordnet sind und unabhängig voneinander angetrieben werden, und dass jeder Riemen (50, 52) in seinem aktiven Zustand vor dem Ende des aktiven Zustandes des anderen Riemens (30, 50, 52) betätigt wird, so dass die Bildung einer Charge (Li) beginnt, bevor die vorhergehende Charge (Li) freigegeben wird.

5. Anordnung (10) nach Anspruch 4, **dadurch gekennzeichnet, dass** die Wartepositionen der Anschläge (60, 62, 64) des ersten Riemens (50) bei passivem Zustand der beiden Riemen (50, 52) gegenüber den Wartepositionen der Anschläge (60, 62, 64) des zweiten Riemens (52) versetzt sind, um zu verhindern, dass sich die Anschläge (60, 62, 64) der beiden Riemen (50, 52) kreuzen.

6. Anordnung (10) nach einem der vorhergehenden Ansprüche, **dadurch gekennzeichnet, dass** jeder Riemen (30, 50, 52) mindestens zwei ähnliche Anschläge (26, 28, 60, 62, 64) aufweist, die entlang dem Riemen (30, 50, 52) in regelmäßigen Abständen angeordnet sind, so dass ein einziger Anschlag (26, 28, 60, 62, 64) für jeden Riemen (30, 50, 52) jeweils eine eingerastete Position einnehmen kann.

7. Anordnung (10) nach einem der vorhergehenden Ansprüche, **dadurch gekennzeichnet, dass** sie eine Vorrichtung (24) zur Einteilung in wabenförmige Zellen (46) aufweist, die am Austritt (20) des Förderbandes (12) angeordnet ist, wobei jede wabenförmige Zelle (46) eine Charge (Li) von Produkten (Pn, Pn+1) enthält, und um diese Charge (Li) zu einer nachgeordneten Bearbeitungsstation weiterzuleiten.

8. Anordnung (10) nach einem der vorhergehenden Ansprüche, **dadurch gekennzeichnet, dass** sie eine Auswurfvorrichtung (88) mit Elementen, wie einem komprimierten Luftstrahl, besitzt, die vor und/oder nach dem Zeiger (22, 23) angeordnet sind.
